# FASCICULE DE BREVET EUROPEEN

(11) **EP 1 158 855 B1**
(45) Date de publication et mention de la délivrance du brevet: **11.06.2003**
(21) Numéro de dépôt: 00909438.4
(22) Date de dépôt: 07.03.2000
(51) Int. Cl.: A01N 25/04, A01N 25/10, C08G 83/00

(54) **COMPOSITIONS PESTICIDES ET/OU REGULATRICES DE LA CROISSANCE DES PLANTES**
PESTIZIDE UND/ODER PFLANZENWACHSTUMSREGULIERENDE ZUSAMMENSETZUNGEN
PESTICIDE AND/OR PLANT GROWTH REGULATING COMPOSITIONS

(30) Priorité: 08.03.1999 FR 9902975
(43) Date de publication de la demande: 05.12.2001
(73) Titulaire: Bayer CropScience S.A., 69009 Lyon (FR)
(72) Inventeur: CAMINADE, Anne-Marie, F-31400 Toulouse (FR); GAUFFRE-GUIRARDEL, Fabienne, F-33600 Pessac (FR); MAJORAL, Jean-Pierre, F-31520 Ramonville Saint-Agne (FR); MARMILLON, Christelle, F-34070 Montpellier (FR); RUMP, Elmar, F-01700 Miribel (FR); VORS, Jean-Pierre, F-69009 Lyon (FR); ZERROUK, Robert, F-43220 Dunières (FR)
(86) Numéro de dépôt international: FR0000557
(87) Numéro de publication internationale: WO00053009

(56) Documents cités:
- WO-A-88/01179
- FR-A- 2 734 268
- D. PR VOT ET.AL.: "Application of the Horner-Wadsworth-Emmons reaction to the functionalization of dendrimers: synthesis of amino acid terminated dendrimers" SYNTHESIS., no. 10, 1997, pages 1199-1207, XP002123803 STUTTGART DE

## Description

La présente invention concerne des compositions pesticides et/ou régulatrices de croissance des plantes et/ou des insectes comprenant des dendrimères particuliers, les dites compositions étant, notamment, utilisables dans les domaines de l'agriculture et/ou de l'hygiène publique ou domestique; de même que des procédés de traitement et/ou de protection des cultures et/ou d'hygiène publique ou domestique mettant en oeuvre les dites compositions ; ainsi que des procédés de préparation de telles compositions ; ou encore des dendrimères particuliers.

On connaît de très nombreuses compositions pesticides et/ou régulatrices de croissance des plantes et/ou des insectes, notamment par les brevets ou demandes de brevet français ou européens EP-869 712, FR-2 733 502, EP-854 676, EP-851 729, EP-823 212, etc.

Les documents, les brevets ou demandes de brevet françaises, européennes ou internationales WO-88/01179, FR-2 734 268, FR-2 761 601, EP-765 357, EP-736 059, EP-726 502 ou la publication Synthesis, **n°10**, 1997, pages 1199-1207, décrivent des utilisations de dendrimères.

Un objet de la présente invention est de fournir des compositions comprenant un dendrimère susceptible de former un gel associé à une matière active pesticide et/ou régulatrice de croissance des plantes et/ou des insectes et utilisables en agriculture et/ou en hygiène publique ou domestique, les dites compositions étant sous la forme d'un gel.

Un objet de la présente invention est de fournir des compositions à base de dendrimères susceptibles de former un gel et dont la structure présente deux types de volumes d'insertion, notamment de matière active.

Un objet de la présente invention est de fournir des compositions à base de dendrimères susceptibles de former un gel et dont la structure comprend des cavités internes propres aux molécules de dendrimères elles-mêmes ainsi que des espaces propres à la structure du gel formé par les dits dendrimères.

Un objet de la présente invention est de fournir des compositions dont la matière active est pour partie localisée dans les cavités internes des dendrimères mis en oeuvre et pour le reste dans la structure du gel que forment les dits dendrimères.

Un objet complémentaire de la présente invention est de fournir des compositions dont la moitié au moins de la matière active est localisée dans la structure du gel que forment les dendrimères mis en oeuvre.

Un objet de la présente invention concerne des dendrimères à capacité renforcée, notamment des dendrimères susceptibles de former un gel.

Un autre objet de la présente invention est de fournir des compositions pulvérulentes à base d'un dendrimère susceptible de former un gel et associé à une ou plusieurs matières actives pesticides et/ou régulatrices de croissance des plantes et/ou des insectes.

Un objet de la présente invention est de fournir des compositions insecticides gélifiées à base d'un dendrimère susceptible de former un gel.

Un objet de la présente invention est de fournir des compositions fongicides gélifiées à base d'un dendrimère susceptible de former un gel.

Un objet de la présente invention est de fournir des compositions herbicides gélifiées à base d'un dendrimère susceptible de former un gel.

Un objet de la présente invention est de fournir des compositions gélifiées et régulatrices de croissance des plantes et/ou des insectes à base d'un dendrimère susceptible de former un gel.

Un objet supplémentaire de la présente invention est de fournir des procédés de protection et/ou de traitement des cultures qui mettent en oeuvre les compositions selon l'invention.

Un autre objet de la présente invention est de fournir des compositions sous forme pulvérulente utilisables dans les domaines de l'agriculture et/ou de l'hygiène publique ou domestique, les dites compositions pulvérulentes pouvant être stockées pendant de longues périodes et en l'absence de tout soin, le tout sans altération substantielle de leurs caractéristiques.

Un objet de la présente invention est également de fournir des procédés de protection et/ou de traitement utiles en hygiène publique ou domestique et mettant en oeuvre les compositions de l'invention, notamment les compositions insecticides et/ou régulatrices de croissance des insectes et/ou animaux nuisibles.

Un objet complémentaire de la présente invention est de fournir des appâts insecticides et/ou nématocides et/ou acaricides et/ou rodenticides.

Les dits appâts insecticides et/ou nématocides et/ou acaricides et/ou rodenticides et se présentant sous la forme de compositions gélifiées sont également un objet de la présente invention.

Un objet supplémentaire de la présente invention est de fournir des compositions utilisables dans les domaines de l'agriculture et/ou de l'hygiène publique ou domestique et présentant une stabilité dans le temps améliorée, particulièrement lors de longues périodes d'entreposage et ainsi de permettre de garder toute son efficacité à la matière active mise en oeuvre.

Un autre objet de la présente invention est de fournir des compositions dont la dangerosité de manipulation est très substantiellement réduite de part leur forme gélifiée.

Un objet de la présente invention concerne également des compositions sous forme gélifiée utilisables dans les domaines de l'agriculture et/ou de l'hygiène publique ou domestique et dont la matière active est libérée de manière progressive.

Un objet complémentaire de la présente invention concerne des compositions sous forme gélifiée utilisables dans les domaines de l'agriculture et/ou de l'hygiène publique ou domestique et dont la matière active est libérée de manière contrôlée.

Un autre objet de la présente invention est de fournir des compositions possédant, outre les avantages évoqués ci-dessus, une sécurité accrue pour les utilisateurs et/ou pour l'environnement, particulièrement des compositions selon l'invention mettant en oeuvre une ou plusieurs matières actives toxiques.

Un autre objet de la présente invention est de fournir des procédés de préparation de compositions sous forme gélifiée utilisables dans les domaines de l'agriculture et/ou de l'hygiène publique ou domestique.

Un autre objet de la présente invention est de fournir des dendrimères particuliers susceptibles de former un gel.

### Compositions selon l'invention

Il a maintenant été trouvé que ces objectifs pouvaient être atteints en tout ou partie grâce aux compositions selon l'invention utilisables notamment dans les domaines de l'agriculture et/ou de l'hygiène publique ou domestique. Les dites compositions selon l'invention comprennent
- une ou plusieurs matières actives utilisables notamment dans les domaines de l'agriculture et/ou de l'hygiène publique ou domestique ;
- un ou plusieurs dendrimères gélifiables ;
- un support liquide, minéral ou organique.

Pour le présent texte, on entend par matière active toute matière active utilisable en agriculture et/ou en hygiène publique ou domestique, notamment toute matière active pesticide et/ou toute matière active régulatrice de croissance des plantes et/ou des insectes ou animaux nuisibles.

L'invention porte également, et cela fera l'objet d'un développement ultérieur, sur des compositions selon l'invention qui comprennent des mélanges, des associations, des combinaisons ou toute autre forme de formulation de plusieurs des dites matières actives.

Un aspect essentiel de la présente invention réside dans la mise en oeuvre de dendrimères particuliers.

Le terme dendrimère désigne des polymères dont la structure spatiale prend la forme d'une arborescence, d'où l'utilisation d'un préfixe emprunté à la langue grecque et dérivé du terme *dendro* signifiant arbre, pour désigner cette famille de macromolécules polymériques de structure arborescente.

Les dendrimères utiles pour les compositions selon l'invention sont plus particulièrement des macromolécules dont la structure arborescente s'étend dans toutes les directions à partir d'une partie centrale.

Ainsi, les dendrimères mis en oeuvre dans les compositions selon l'invention sont des macromolécules constituées d'une partie centrale, dite coeur du dendrimère, et à laquelle sont liées des séries de chaînes ramifiées, appelées dendrons.

La figure (I) donne une représentation schématique de la structure arborescente du type de celle des dendrimères des compositions selon l'invention. La dite structure comprend
- un coeur, le plus souvent constitué d'un groupement chimique polyfonctionnel et capable d'être lié à une pluralité de chaînes ramifiées ou dendrons ;
- des branches, généralement composées de fragments organiques linéaires ou ramifiés, liées entre elles et au dit coeur, et organisées de manière arborescente ;
- des fonctions chimiques terminales, c'est-à-dire constituant l'extrémité périphérique des dites branches ;
- des cavités internes résultant, de façon inhérente, des ramifications des dites branches.

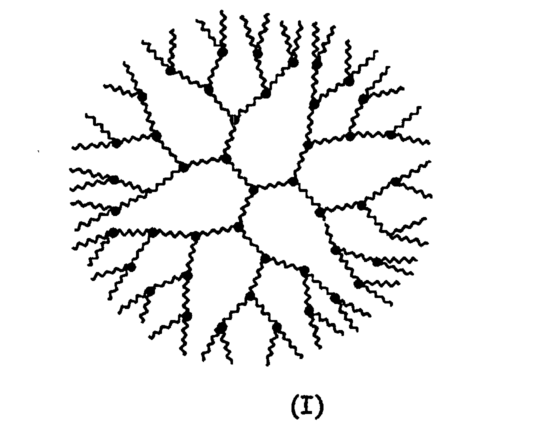

La représentation schématique de la figure (II) reprend la figure (I) complétée par une légende, permettant ainsi une illustration plus précise des éléments que peut comprendre la structure arborescente du type de celle des dendrimères de l'invention.

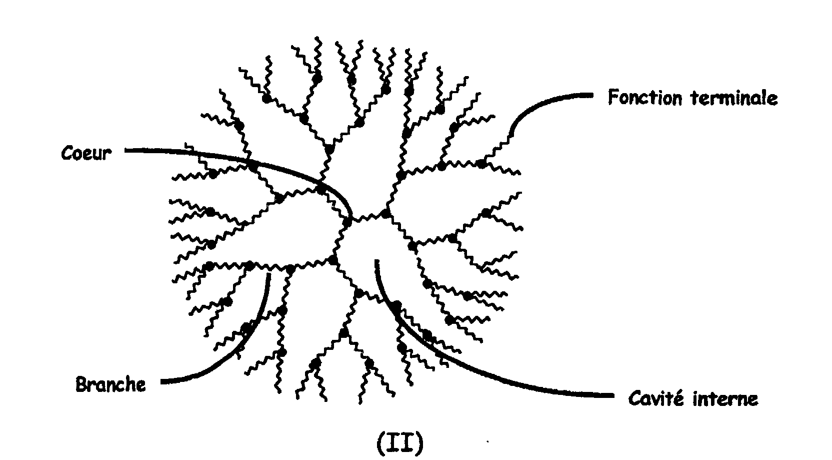

Le coeur organique est donc la partie centrale des dendrimères utiles pour les compositions selon l'invention. Il est, en général, constitué d'un groupement chimique, le plus souvent organique, polyfonctionnel et susceptible d'être rattaché à de multiples chaînes ramifiées. Le coeur des dendrimères de la présente invention est également caractérisé par une valence multiple qui correspond au nombre de dendrons auxquels il est susceptible d'être rattaché. Des précisions concernant le coeur des dits dendrimères mis en oeuvre dans les compositions selon l'invention seront données dans le présent texte lors de la description détaillée des dits dendrimères.

Les dendrons des dits dendrimères sont des chaînes organiques ramifiées liées au coeur. Généralement, les dits dendrons sont des séries des dites chaînes ramifiées.

Les fonctions terminales des dendrimères utiles pour les compositions selon l'invention sont des fonctions chimiques présentes aux extrémités des dendrons, parmi les très nombreuses fonctions chimiques qui peuvent constituer les dites fonctions terminales, on peut, par exemple, citer les fonctions ammonium, amidinium, pyridinium, guanidinium, carboxylate ou encore les acides carboxyliques. Les dites fonctions terminales confèrent habituellement aux dits dendrimères certaines de leurs caractéristiques, notamment la possibilité de très nombreuses réactions individuelles en périphérie.

Les cavités internes des dendrimères mis en oeuvre dans les compositions selon l'invention résultent, de façon inhérente, de l'existence des ramifications des dits dendrimères. Les dites cavités internes permettent notamment l'inclusion de substances variées au sein de la structure arborescente des dits dendrimères. Toutefois, la taille et l'accessibilité de ces cavités internes limite l'inclusion des dites substances aux seules molécules dont la taille et les propriétés leurs sont compatibles.

Pour la préparation des dendrimères utiles pour les compositions de la présente invention, on peut, principalement, citer deux types de méthodes de synthèse, les synthèses divergentes et les synthèses convergentes :
- dans les méthodes divergentes, la synthèse s'effectue du coeur vers la périphérie en greffant un nombre de plus en plus grand de petites molécules sur la surface du dendrimère possédant de multiples fonctions chimiques, une représentation d'une telle voie de synthèse est donnée par le schéma (III) ;
- dans les méthodes convergentes, la synthèse s'effectue de la périphérie vers le coeur en associant entre elles des molécules de plus en plus grosses et ayant en permanence une fonction chimique disponible au niveau du coeur, une représentation d'une telle voie de synthèse est donnée par le schéma (IV).

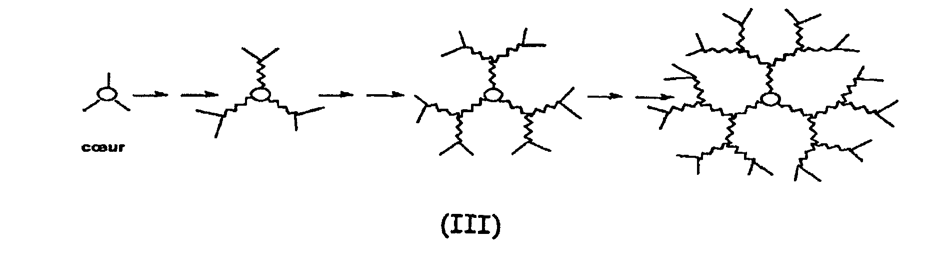

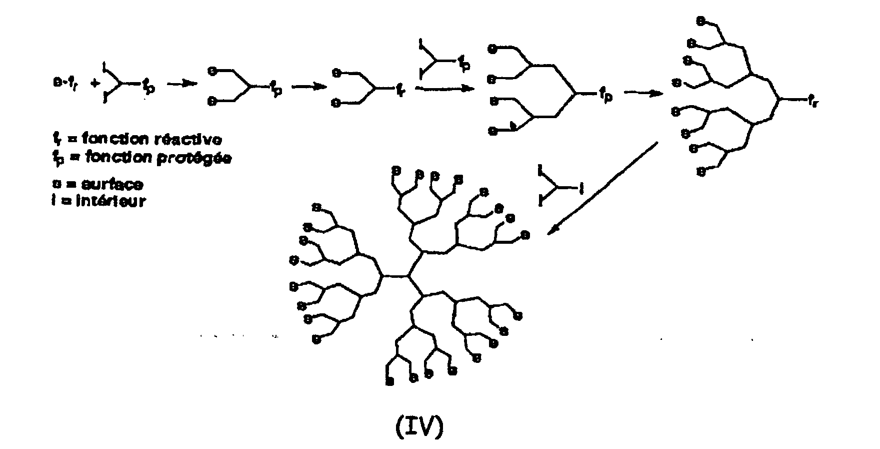

En outre, par ces modes de construction, l'ensemble des points de jonction des branches situés à une distance similaire du coeur des dendrimères employés pour les compositions selon l'invention peuvent être définis comme faisant partie d'une même génération, chaque génération peut alors définir pour les dits dendrimères des couches constituées par ces points de jonction.

D'autre part, ce mode de construction des dendrimères, par répétition d'étapes, est avantageux en ce qu'il peut permettre un contrôle précis, entre autres, de leur masse moléculaire, de leur taille, de leur forme ainsi que de leur capacité à réagir chimiquement.

On peut se reporter aux différents textes de l'ouvrage Les dendrimères de l'association *ECRIN* publié en juin 1998 par les éditions SACER, dans lesquels sont décrits des dendrimères.

Les compositions selon l'invention sont caractérisées en ce qu'elles comprennent une matière active telle que définie précédemment, un dendrimère susceptible de former un gel et un support liquide, minéral ou organique.

En outre et selon les besoins ou la nature de la maladie à traiter, des végétaux nuisibles, des insectes et/ou animaux nuisibles à combattre, détruire ou éradiquer, ou selon les degrés d'infestation de ces nuisibles, ou encore selon les conditions climatiques et/ou édaphiques, les compositions selon l'invention peuvent contenir toutes autres substances habituelles pour la formulation de compositions utiles dans les domaines de l'agriculture et/ou de l'hygiène publique ou domestique.

Parmi ces composés, on peut citer, à titre d'exemple, les adjuvants, les agents anti-mottants, les colorants, les épaississants, les agents tensioactifs, les composés anti-mousse, les détergents tels les sels de métaux alcalino-terreux, les dispersants, les agents d'alcalinisation telles les bases, les agents d'adhésion, les émulsifiants, les agents oxydants tels que les capteurs de radicaux libres ou que les destructeurs catalytiques d'hydroperoxydes, les agents anti-corrosion, des substances attractives et/ou alimentaires pour la préparation d'appâts insecticides notamment.

Plus généralement, les compositions selon l'invention peuvent comprendre tous les additifs solides ou liquides correspondants aux techniques habifuelles de la mise en formulation et acceptables pour des usages en agriculture et/ou en hygiène publique ou domestique par exemple.

Également selon les besoins, la nature des maladies à traiter, des insectes et/ou animaux nuisibles et/ou des végétaux nuisibles, à combattre, détruire ou éradiquer, les degrés d'infestation de ces nuisibles, les conditions climatiques et/ou édaphiques, les compositions selon l'invention peuvent contenir une ou plusieurs matières actives associées de type fongicide et/ou insecticide et/ou acaricide et/ou rodenticide et/ou nématocide et/ou répulsive d'insectes et/ou d'animaux nuisibles et/ou régulatrice de croissance des plantes et/ou des insectes et/ou une ou plusieurs matières actives herbicides.

D'une manière générale, les matières actives pesticides et/ou régulatrices de croissance pouvant entrer dans la formulation des compositions selon l'invention sont celles listées dans tout ouvrage phytosanitaire, par exemple L'Index Phytosanitaire (publié par la Direction technique de l'Association de Coordination Technique Agricole ou A.C.T.A.) ou encore The Pesticide Manual (du British Crop Protection Council, édité par Clive Tomlin) ou bien encore The Electronic Pesticide Manual version 1.1 (du British Crop Protection Council, édité par Clive Tomlin).

Préférentiellement, et parmi les matières actives fongicides qui peuvent être employées seules ou en association avec d'autres matières actives, notamment pesticides, dans les compositions selon l'invention, on peut citer le 2-phenylphenol ; le sulfate de 8-hydroxyquinoline; l'AC 382042 ; l'Ampelomyces quisqualis ; l'Azaconazole ; l'Azoxystrobin ; le Bacillui subtilis ; le Benalaxyl ; le Benomyl ; le Biphenyl ; le Bitertanol ; la Blasticidin-S ; le bouillie bordelaise ; le Borax ; le Bromuconazole ; le Bupirimate ; le Calboxin ; le polysulfure de calcium; le Captafol ; le Captan ; le Carbendazim ; le Carpropamid (KTU 3616) ; le *CGA* 279202 ; le Chinomethionat ; le Chlorothalonil ; le Chlozolinate ; l'hydroxide de cuivre; le naphthenate de cuivre; l'oxychlorure de cuivre; le sulfate de cuivre; l'oxide cuivreux ; le Cymoxanil ; le Cyproconazole ; le Cyprodinil ; le Dazomet ; le Debacarb ; le Dichlofluanid ; le Dichlomezine ; le Dichlorophen ; le Diclocymet ; le Dicloran ; le Diethofencarb ; le Difenoconazole ; le Difenzoquat ; le Difenzoquat Metilsulfate ; le Diflumetorim ; le Dimethirimol ; le Dimethomorph ; le Diniconazole ; le Diniconazole-M ; le Dinobuton ; le Dinocap ; la diphnenylamine ; le Dithianon ; le Dodemorph ; le Dodemorph acétate ; la Dodine ; la Dodine base libre ; l'Edifenphos ; l'Epoxiconazole (BAS 480F) ; l'Ethasulfocarb ; l'Ethirimol ; l'Etridiazole ; la Famoxadone ; la Fenamidone ; le Fenarimol ; le Fenbuconazole ; le Fenfin ; le Fenfuram ; le Fenhexamid ; le Fenpiclonil ; le Fenpropidin ; le Fenpropimorph ; le Fentin acétate ; le Fentin hydroxide ; le Ferbam ; le Ferimzone ; le Fluazinam ; le Fludioxonil ; le Fluoroimide ; le Fluquinconazole ; le Flusilazole ; le Flusulfamide ; le Flutolanil ; le Flutriafol ; le Folpet ; le formaldehyde ; le Fosetyl ; le Fosetyl-aluminium ; le Fuberidazole ; le Furalaxyl ; le Fusarium oxysporum ; le Gliocladium virens ; la Guazatine ; le Guazatine acetates ; le GY-81 ; l'hexachlorobenzene ; l'Hexaconazole ; l'Hymexazol ; l'ICIA0858 ; l'IKF-916 ; l'Imazalil ; l'Imazalil sulfate; l'Imibenconazole ; l'Iminoctadine ; l'Iminoctadine triacetate ; l'Iminoctadine tris[Albesilate] ; l'Ipconazole ; l'Iprobenfos ; l'Iprodione ; l'Iprovalicarb ; le Kasugamycin ; le Kasugamycin hydrochlorure hydrate ; le Kresoxim-methyl ; le Mancopper ; le Mancozeb ; le Maneb ; le Mepanipyrim ; le Mepronil ; le chlorure mercurique; l'oxide mercurique; le chlorure mercureux; le Metalaxyl ; le Metalaxyl-M ; le Metam ; le Metam-sodium ; le Metconazole ; le Methasulfocarb ; l'isothiocyanate de methyle ; le Metiram ; le Metominostrobin (SSF-126); le MON65500 ; le Myclotbutanil ; le Nabam ; l'acide naphthenique ; le Natamycin ; le bis(dimethyidithiocarbamate) de nickel ; le Nitrothal-isopropyl ; le Nuarimol ; l'Octhilinone ; l'Ofurace ; l'acide oléique (les acides gras) ; l'Oxadixyl ; l'Oxine-copper ; l'Oxycarboxin ; le Penconazole ; le Pencycuron ; le Pentachlorophenol ; le laurate de pentachlorophenyle ; le Perfurazoate ; l'acetate de phenylmercure ; le Phlebiopsis gigantea ; le Phthalide ; le Piperalin ; la polyoxine B ; les polyoxines ; le Polyoxorim ; l'hydroxyquinoline sulfate de potassium ; le Probenazole ; le Prochloraz ; la Procymidone ; le Propamocarb ; le Propamocarb Hydrochloride ; le Propiconazole ; le Propineb ; le Pyrazophos ; le Pyributicarb ; le Pyrifenox ; le Pyrimethanil ; le Pyroquilon ; le Quinoxyfen ; le Quintozene ; le RH-7281 ; la sec-butylamine ; le 2-phenylphenoxide de sodium ; le pentachlorophenoxide de sodium ; le Spiroxamine (KWG 4168) ; le Streptomyces griseoviridis ; le soufre ; les huiles de goudron ; le Tebuconazole ; le Tecnazene ; le Tetraconazole ; le Thiabendazole ; le Thifluzamide ; le Thiophanate-methyl ; le Thiram ; le Tolclofos-methyl ; le Tolylfluanid ; le Triadimefon ; le Triadimenol ; le Triazoxide ; le Trichoderma harzianum ; le Tricyclazole ; le Tridemorph ; le Triflumizole ; le Triforine ; le Triticonazole ; la Validamycin ; le Vinclozolin ; le naphthenate de zinc ; le Zineb ; le Ziram ; les composés de nom chimique (E,E)-2-(2-(1-(1-(2-pyridyl)propyloxyimino)-1-cyclopropylméthyloxyméthyl)-phényl)-3-éthoxy-propénoate de méthyle et le 3-(3,5-dichlorophenyl) 4-chloro pyrazole.

Parmi les matières actives insecticides, acaricides, nématocides qui peuvent être employées seules ou en association avec d'autres matières actives, notamment pesticides, dans les compositions selon l'invention, on peut citer l'Abamectin ; l'Acephate ; l'Acetamiprid ; l'acide oléique ; l'Acrinathrin ; l'Aldicarb ; l'Alanycarb ; l'Allethrin [(1R)-isomères]; l'α-Cypermethrin ; l'Amitraz ; l'Avermectin B1 et ses dérivés, l'Azadirachtin ; l'Azamethiphos ; l'Azinphos-ethyt ; l'Azinphos-methyl; le Bacillus thurigiensi ; le Bendiocarb ; le Benfuracarb ; le Bensultap ; la β-cyfluthrin ; la β-cypermethrin ; le Bifenazate ; la Bifenthrin ; la Bioallathrin ; la Bioallethrin (isomère S-cyclopentényl) ; la Bioresmethrin ; le Borax ; le Buprofezin ; le Butocarboxim ; le Butoxycarboxim ; le butoxyde de piperonyle ; le Cadusafos ; le Carbaryl ; le Carbofuran ; le Carbosulfan ; le Cartap ; le Cartap hydrochloride ; le Chlordane ; le Chlorethoxyfos ; le Chlorfenapyr ; le Chlorfenvinphos ; le Chlorfluazuron ; le Chlormephos ; la Chloropicrin ; le Chlorpyrifos ; le Chlorpyrifos-methyl ; le chlorure mercureux ; le Coumaphos ; la Cryolite ; la Cryomazine ; le Cyanophos ; le cyanure de calcium ; le cyanure de sodium ; la Cycloprothrin ; la Cyfluthrin ; la Cyhalothrin ; la Cypermethrin ; la Cyphenothrin [(1R)-trans-isomers]; le Dazomet ; le DDT ; la Deltamethrin ; le Demeton-S-methyl ; le Diafenthiuron ; le Diazinon ; le dibromure d'éthylène ; le dichlorure d'éthylène ; le Dichlorvos ; le Dicofol ; le bicrotophos ; le Diflubenzuron ; le Dimethoate ; le bimethylvinphos ; le Diofenolan ; le Disulfoton ; le DNOC ; le DPX-JW062 et DP ; l'Empenthrin [(EZ)-(1R)-isomères] ; l'Endosulfan ; l'ENT 8184 ; l'EPN ; l'Esfenvalerate ; l'Ethiofencarb ; l'Ethion ; l'Ethiprole de nom chimique 5-amino-3-cyano-1-(2,6-dichloro-4-trifluorométhyl-phényl)-4-éthylsulfinylpyrazole ; l'Ethoprophos ; l'Etofenprox ; l'Etoxazole ; l'Etrimfos ; le Famphur ; le Fenamiphos ; le Fenitrothion ; le Fenobucarb ; le Fenoxycarb ; la Fenpropathrin ; le Fenthion ; le Fenvalerate ; le Fipronil et les composés de la famille des arylpyrazoles ; le Flucycloxuron ; le Flucythrinate ; le Flufenoxuron ; le Flufenprox ; la Flumethrin ; le Fluofenprox ; le fluorure de sodium ; le fluorure de sulfuryle ; le Fonofos ; le Formetanate ; le Formetanate hydrochloride ; le Formothion ; le Furathiocarb ; le Gamma-HCH ; le GY-81 ; le Halofenozide ; le Heptachlor ; le Heptenophos ; le Hexaflumuron ; le hexafluorosilicate de sodium ; les huiles de goudron ; les huiles de pétrole ; le Hydramethylnon ; le cyanure d'hydrogène ; l'Hydroprene ; l'Imidacloprid ; l'Imiprothrin ; l'Indoxacarb ; l'Isazofos ; l'Isofenphos ; l'Isoprocarb ; l'Isothiocyanal de méthyle ; l'Isoxathion ; la lambda-Cyhalothrin ; le laurate de pentachlorophényle ; le Lufenuron ; le Malathion ; le MB-599 ; le Mecarbam ; le Methacrifos ; le Methamidophos ; le Methidathion ; le Methiocarb ; le Methomyl ; le Methoprene ; le Methoxychlor ; le Metolcàrb ; le Mevinphos ; la Milbemectin et ses dérivés ; le Monocrotophos ; le Naled ; la nicotine ; le Nitenpyram ; la Nithiazine ; le Novaluron ; l'Omethoate ; l'Oxamyl ; l'Oxydemeton-methyl ; le Paecilomyces fumosoroseus ; le Parathion ; le Parathion-methyl ; le pentachlorophénol ; le pentachlorophénoxide de sodium; la Permethrin ; la Phenothrin [(1R)-trans-isomer]; le Phenthoate ; le Phorate ; le Phosalone ; le Phosmet ; le Phosphamidon ; la phosphine ; le phosphure d'aluminium ; le phosphure de magnésium ; le phosphure de zinc ; le Phoxim ; le Pirimicarb ; le Pirimiphos-ethyl ; le Pirimiphos-methyl ; le polysulfure de calcium ; la Prallethrin ; le Profenofos ; le Propaphos ; le Propetamphos ; le Propoxur ; le Prothiofos ; le Pyraclofos ; les pyrethrines (chrysanthemates, pyrethrates, pyrethrum) ; la Pyretrozine ; le Pyridaben ; le Pyridaphenthion ; le Pyrimidifen ; le Pyriproxyfen ; le Quinalphos ; le Resmethrin ; le RH-2485 ; la Rotenone ; le RU 15525 ; le Silafluofen ; le Sulcofuron-sodium ; le Sulfotep ; le sulfuramide ; le Sulprofos ; le Ta-fluvalinate ; le Tebufenozide ; le Tebupirimfos ; le Teflubenzuron ; la Tefluthrin ; le Temephos ; le Terbufos ; le Tetrachlorvinphos ; la Tetramethrin ; la Tetramethrin [(1R)-isomèrès] ; la θ-cypermethrin ; le Thiametoxam ; le Thiocyclam ; le Thiocyclam hydrogen oxalate ; le Thiodicarb ; le Thiofanox ; le Thiometon ; la Tralomethrin ; la Transffuthrin ; le Triazamate ; le Triazophos ; le Trichlorfon ; le Triflumuron ; le Trimethacarb ; le Vamidothion ; le XDE-105 ; le XMC ; le Xylylcarb ; la Zeta-cypermethrin ; le ZXI 8901 ; le composé dont le nom chimique est le 3-acetyl-5-amino-1-[2,6-dichloro-4-(trifluoromethyl)phenyl]-4-methylsulfinyl pyrazole.

Parmi les matières actives herbicides qui peuvent être employées seules ou en association avec d'autres matières actives, notamment pesticides, dans les compositions selon l'invention, on peut citer le 2,3,6-TBA ; le 2,4-D ; le 2,4-D-2-ethylhexyl ; le 2,4-DB ; le 2,4-DB-butyl ; le 2,4-DB-Dimethylammonium; le 2,4-DB-Isoctyl ; le 2,4-DB-Potassium ; le 2,4-DB-sodium ; le 2,4-D-Butotyl (2,4-D-Butotyl (2,4-D Butoxyethyl Ester)) ; le 2,4-D-butyl ; le 2,4-D-Dimethylammonium ; le 2,4-D-diolamine ; le 2,4-D-isoctyl ; le 2,4-D-isopropyl ; le 2,4-D-sodium ; le 2,4-D-trolamine ; l'Acetochlor ; l'Acifluorfen ; l'Acifluorfen-sodium ; l'Aclonifen ; l'Acrolein; l'AKH-7088 ; l'Alachlor ; l'Alloxydim ; l'Alloxydim-sodium ; l'Ametryn ; l'Amidosulfuron ; l'Amitrole ; le sulfamate d'ammonium; l'Anilofos ; l'Asulam ; l'Asulam-sodium ; l'Atrazine ; l'Azafenidin ; l'Azimsulfuron ; le Benazolin ; le Benazolin-ethyl ; le Benfluralin ; le Benfuresate ; le Benoxacor ; le Bensulfuron ; le Bensulfuron-methyl ; le Bensulide ; le Bentazone ; le Bentazone-sodium ; le Benzofenap ; le Bifenox ; le Bilanafos ; le Bilanafos-sodium ; le Bispyribac-sodium ; le Borax ; le Bromacil ; le Bromobutide ; le Bromofenoxim ; le Bromoxynil ; le Bromoxynil-heptanoate ; le Bromoxynil-octanoate; le Bromoxynil-potassium ; le Butachlor ; le Butamifos ; le Butralin ; le Butroxydim ; le butylate ; le Cafenstrole ; le Carbetamide ; le Carfentrazone-ethyl ; le Chlomethoxyfen ; le Chloramben ; le Chlorbromuron ; le Chloridazon ; le Chlorimuron ; le Chlorimuron-ethyl ; le Chloroacetic Acid ; le Chlorotoluron ; le Chlorpropham ; le Chlorsulfuron ; le Chlorthal ; le Chlorthal-dimethyl ; le Chlorthiamid ; le Cinmethylin ; le Cinosulfuron ; le Clethodim ; le Clodinafop ; le Clodinafop-Propargyl ; le Clomazone ; le Clomeprop ; le Clopyralid ; le Clopyralid-Olamine ; le Cloquintocet ; le Cloquintocet-Mexyl ; le Cloransulam-methyl ; le CPA ; le CPA-dimethylammonium ; le CPA-isoctyl ; le CPA-thioethyl ; le Cyanamide ; le Cyanazine ; le Cycloate ; le Cyclosulfamuron ; le Cycloxydim ; le Cyhalofop-butyl ; le Daimuron ; le Dalapon ; le Dalapon-sodium ; le Dazomet ; le Desmedipham ; le Desmetryn ; le Dicamba ; le Dicamba-dimethylammonium ; le Dicamba-potassium ; le Dicamba-sodium ; le Dicamba-trolamine ; le Dichlobenil ; le Dichlormid ; le Dichlorprop ; le Dichlorprop-butotyl (Dichlorprop-butotyl (Dichlorprop butoxyethyl ester)) ; le Dichlorprop-dimethylammonium ; le Dichlorprop-isoctyl ; le Dichlorprop-P ; le Dichlorprop-potassium; le Diclofop ; le Diclofop-methyl ; le Difenzoquat ; le Difenzoquat metilsulfate ; le Diflufenican ; le biflufenzopyr (BAS 654 *OO* H) ; le Dimefuron ; le Dimepiperate ; le Dimethachlor ; le Dimethametryn ; le Dimethenamid ; le Dimethipin ; l'acide dimethylarsinique; le Dinitramine ; le Dinoterb ; le Dinoterb acétate ; le Dinoterb-ammonium ; le Dinoterb-diolamine ; le Diphenamid ; le Diquat ; le Diquat dibromide ; le Dithiopyr ; le Diuron ; le DNOC ; le DSMA ; l'Endothal ; l'EPTC ; l'Esprocarb ; l'Ethalfluralin ; l'Ethametsulfuron-methyl ; l'Ethofumesate ; l'Ethoxysulfuron ; l'Etobenzanid ; le Fenchlorazole-ethyl ; le Fenclorim ; le Fenoxaprop-P; le Fenoxaprop-P-ethyl ; le Fenuron ; le Fenuron-TCA ; le Ferrous Sulfate ; le Flamprop-M ; le Flamprop-M-Isopropyl ; le Flamprop-M-methyl ; le Flazasulfuron ; le Fluazifop ; le Fluazifop-butyl ; le Fluazifop-P ; le Fluazifop-P-butyl ; le Fluazolate ; le Fluchloralin ; le Flufenacet (BAS FOE 5043); le Flumetsulam ; le Flumiclorac ; le Flumiclorac-Pentyl ; le Flumioxazin ; le Fluometuron ; le Fluoroglycofen ; le Fluoroglycofen-ethyl ; le Flupaxam ; le Flupoxam ; le Flupropanate ; le Flupropanate-sodium ; le Flupyrsulfuron-methyl-sodium ; le Flurazole ; le Flurenol ; le Flurenol-butyl ; le Fluridone ; le Flurochloridone ; le Fluroxypyr ; le Fluroxypyr-2-Butoxy-1-methylethyl ; le Fluroxypyr-methyl ; la Flurtamone ; le Fluthiacet-methyl ; le Fluxofenim ; le Fomesafen ; le Fomesafen-sodium ; le Fosamine ; le Fosamine-ammonium ; le Furilazole ; le Glyphosate ; le Glufosinate ; le Glufosinate-ammonium ; le Glyphosate-ammonium ; le Glyphosate-isopropylammonium ; le Glyphosate-sodium ; le Glyphosate-trimesium ; le Halosulfuron ; le Halosulfuron-methyl ; le Haloxyfop ; le Haloxyfop-P-methyl ; le Haloxyfop-etotyl ; le Haloxyfop-methyl ; le Hexazinone ; le Hilanafos ; l'Imazacluin ; l'Imazamethabenz ; l'Imazamox ; l'Imazapyr ; l'Imazapyr-isopropylammonium ; l'Imazaquin ; l'Imazaquin-ammonium ; l'Imazemethabenz-methyl ; l'Imazethapyr ; l'Imazethapyr-ammonium ; l'Imazosulfuron ; l'Imizapic (AC 263,222) ; l'Indanofan ; l'Ioxynil ; l'Ioxynil octanoate ; l'Ioxynil-sodium ; l'Isoproturon ; l'Isouron ; l'Isoxaben ; l'Isoxaflutole ; le Lactofen ; le Laxynel octanoate ; le Laxynil-sodium ; le Lenacil ; le Linuron ; le MCPA ; le MCPA-butotyl ; le MCPA-dimethylammonium ; le MCPA-isoctyl ; le MCPA-potassium ; le MCPA-sodium ; le MCPA-thioethyl ; le MCPB; le MCPB-ethyl ; le MCPB-sodium; le Mecoprop ; le Mecoprop-P ; le Mefenacet ; le Mefenpyr-diethyl ; le Mefluidide ; le Mesulfuron-methyl ; le Metam ; le Metamitron ; le Metam-sodium ; le Metezachlor ; le Methabenzthiazuron ; l'isothiocyanate de methyle ; l'acide methylarsonic ; le Methyldymron ; le Metobenzuron ; le Metobromuron ; le Metolachlor ; le Metosulam ; le Metoxuron ; le Metribuzin ; le Metsulfuron ; le Molinate ; le Monolinuron ; le MPB-sodium ; le MSMA ; le Napropamide ; le Naptalam ; le Naptalam-sodium; le Neburon ; le Nicosulfuron ; l'acid nonanoique ; le Norflurazon ; l'acide oleique (acides gras); l'Orbencarb ; l'Oryzalin ; l'Oxabetrinil ; l'Oxadiargyl ; l'Oxasulfuron ; l'Oxodiazon ; l'Oxyfluorfen ; le Paraquat ; le Paraquat Dichloride ; le Pebulate ; le Pendimethalin ; le Pentachlorophenol ; le Pentachlorophenyl Laurate ; le Pentanochlor ; le Pentoxazone ; les huiles de pétrole ; le Phenmedipham ; le Picloram ; le Picloram-potassium ; le Piperophos ; le Pretilachlor ; le Primisulfuron ; le Primisulfuron-methyl ; le Prodiamine ; le Prometon ; le Prometryn ; le Propachlor ; le Propanil ; le Propaquizafop ; le Propazine ; le Propham ; le Propisochlor ; le Propyzamide ; le Prosulfocarb ; le Prosulfuron ; le Pyraflufen-ethyl ; le Pyrazasulfuron ; le Pyrazolynate ; le Pyrazosulfuron-ethyl ; le Pyrazoxyfen ; le Pyribenzoxim ; le Pyributicarb ; le Pyridate ; le Pyriminobac-methyl ; le Pyrithiobac-sodium ; le Quinclorac ; le Quinmerac ; le Quinofolamine ; le Quizalofop ; le Quizalofop-ethyl ; le Quizalofop-P ; le Quizalofop-P-ethyl ; le Quizalofop-P-Tefuryl ; le Rimsulfuron ; le Sethoxydim ; le Siduron ; le Simazine ; le Simetryn ; le chlorate de sodium ; le chloroacetate de sodium ; le pentachlorophenoxide de sodium ; le sodium-Dimethylarsinate ; le Sulcotrione ; le Sulfentrazone ; le Sulfometuron ; le Sulfometuron-methyl; le Sulfosulfuron ; l'acide Sulfurique; les goudrons; le TCA-sodium ; le Tebutam ; le Tebuthiuron ; le Tepraluxydim (BAS 62OH) ; le Terbacil ; le Terbumeton ; le Terbuthylazine ; le Terbutryn ; le Thenylchlor ; le Thiazopyr ; le Thifensulfuron ; le Thifensulfuron-methyl ; le Thiobencarb ; le Tiocarbazil ; le Tralkoxydim ; le tri-Allate ; le Triasulfuron ; le Triaziflam ; le Tribenuron ; le Tribenuron-methyl ; le Tribenuron-methyl ; l'acide trichloroacetique ; le Triclopyr ; le Triclopyr-butotyl ; le Triclopyr-triethylammonium ; le Trietazine ; le Trifluralin ; le Triflusulfuron ; le Triflusulfuron-methyl ; le Vernolate ; l'YRC 2388.

Dans les compositions selon l'invention, la ou les matières actives peuvent se présenter sous différentes formes physiques, notamment sous forme solide, ainsi que sous forme liquide ou semi-liquide.

La ou les matières actives des compositions selon l'invention sont présentes en des quantités comprises entre 0,5 et 99,99%, de préférence entre 5 et 70% en poids des dites compositions.

Les dendrimères mis en oeuvre dans les compositions selon l'invention, également appelés dendrimères selon l'invention, sont les dendrimères susceptibles de former un gel.

Une méthode avantageuse pour connaître si un dendrimère particulier est susceptible de former un gel consiste à mélanger, à une température d'environ 65°C, du dit dendrimère avec de l'eau en proportions pondérales respectives 1,5/98,5; le mélange forme un gel au sens de la présente invention si, après 48 heures, le produit obtenu ne coule pas lorsqu'il est posé, à l'état de masse cubique, sur une surface plane.

Selon une autre méthode permettant de connaître si un dendrimère particulier est susceptible de former un gel de qualité particulièrement avantageuse pour l'invention, on mélange, à température ambiante, du dit dendrimère avec de l'eau en proportions pondérales respectives 1/1 ; le mélange forme un gel au sens de la présente invention si, après deux semaines, le produit obtenu ne coule pas lorsqu'il est posé, à l'état de masse cubique, sur une surface plane.

Une autre méthode particulièrement avantageuse pour déterminer si un dendrimère particulier est susceptible de former un gel , peut consister à procéder comme suit : le dendrimère particulier est mélangé à de l'eau, préférentiellement solubilisé dans de l'eau, en proportions pondérales respectives 1,8/98,2, à une température qui peut être comprise entre 40 et 65°C, puis ce mélange est chauffé pendant 4 semaines à une température d'environ 60-65°C, pour obtenir un produit gélifié qui ne coule pas lorsqu'il est posé, à l'état de masse cubique, sur une surface plane.

Selon un autre aspect de l'invention, les gels qui sont susceptibles d'être formés par les dendrimères particuliers utiles pour les compositions selon l'invention, sont des colloïdes de phase substantiellement continue et qui donnent un produit visqueux de type gelée ; il peut également s'agir d'un système dispersé consistant par exemple en un composé de poids moléculaire élevé ou en un agrégat de molécules de dendrimères utiles pour les compositions selon l'invention, en association intime avec un support liquide, minéral ou organique.

Les dendrimères utiles selon les compositions de l'invention et qui sont donc les dendrimères susceptibles de former un gel, peuvent notamment être des dendrimères neutres ou des dendrimères de type ionique, indifféremment de type anionique ou cationique.

Comme dendrimères utiles selon les compositions de l'invention qui sont neutres, on peut citer ceux dont les fonctions terminales sont principalement constituées de groupements de type acide carboxylique et/ou de type phosphonique et/ou de type sulfonique, sulfonate ou sulfate et/ou de type amine.

Comme dendrimères utiles selon les compositions de l'invention et qui sont de type ionique, on peut avantageusement mentionner les dendrimères dont les fonctions terminales comprennent essentiellement des groupements choisis parmi les groupements carboxylate et/ou sulfonium et/ou phosphonium et/ou amidinium et/ou guanidinium et/ou ammonium, par exemple les groupements de type ammonium secondaire, tertiaire ou quaternaire, tout particulièrement les groupements de type pyridinium.

Comme dendrimères utiles pour les compositions selon l'invention et qui sont tout particulièrement avantageux, on peut mentionner des dendrimères particuliers dont les fonctions terminales comprennent essentiellement des radicaux issus de groupements de type halogénure de N-hydrazinoyl-carbonyl-méthyl-N,N,N-trialkylammonium, groupements parmi lesquels on peut, à titre d'exemple, citer le chlorure de N-hydrazinoyl-carbonyl-méthyl-N,N,N-tri-(n-propyl)ammonium appelé réactif de Girard PR ou le chlorure de N-hydrazinoyl-carbonyl-méthyl-N,N,N-triméthylammonium représenté par la figure (V) ci-dessous et qui sera appelé réactif de Girard T pour la suite du présent texte, de même que l'on peut mentionner le chlorure de N-hydrazinoyl-carbonyl-méthyl-N,N,N-pyridinium appelé réactif de Girard P pour la suite du présent texte.

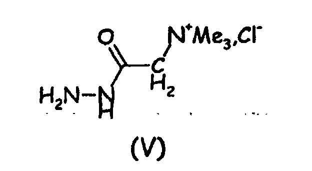

Les dites fonctions terminales des dendrimères utiles selon les compositions de l'invention sont rattachées aux extrémités des chaînes ramifiées que constituent les branches des dits dendrimères, soit directement, soit par le moyen d'un résidu chimique organique appelé maillon de connexion pour le présent exposé.

Le dit maillon de connexion des dendrimères utiles pour les compositions de l'invention se compose le plus souvent d'un radical hydrocarboné contenant de 2 à 50 atomes de carbone, de préférence de 4 à 20 atomes de carbone, le dit radical pouvant être saturé ou insaturé et/ou linéaire ou ramifié et/ou substitué ou non.

Le dit maillon de connexion peut également se composer d'un radical hydrocarboné tel que défini précédemment et contenant, outre des atomes de carbone, un ou plusieurs hétéroatomes, notamment de l'oxygène, du soufre, de l'azote, du phosphore, des halogènes.

Comme maillons de connexion utiles pour les dendrimères mis en oeuvre dans les compositions selon l'invention on peut citer les groupements de type alkyle, aryle, alkoxyalkyle, alkoxyaryle, alkylhydrazinoyle, arylhydrazinoyle, carboxyalkyl-hydrazido et notamment carboxyméthyl-hydrazido, cyanoalkyle, allyle, propargyle, halocycloalkyle, haloalkoxyalkyle, alkylthioalkyle, haloalkylthioalkyle, aminoalkyle, N-alkylaminoalkyle, N,N-dialkylaminoalkyle, acylaminoalkyle, arylalkyle, phényle iminoalkyle, iminoaryle, imidoalkyle, amidoaryle, phosphoalkyle, phosphoryle, thiophosphoryle, phosphoraminoalkyle, phosphoraminoaryle, phosphoriminoalkyle, phosphoriminoaryle, phosphorimidoalkyle, phosphorimidoaryle, hydrazinoalkyle, hydrazinoaryle, allylidenealkylhydrazynoyle, allylidenearylhydrazinoyle, époxybenzylidene, dialkylphosporimidoyle, diarylphosphorimidoyle, thioimidophosphoryle, thio-N-alkylazophosphoryle, thio-N-arylazophosphoryle éventuellement substitué par un ou plusieurs groupes choisis parmi les groupements du type hydroxy, mercapto, nitro, thiocyanato, azido, cyano, pentafluorosulfonyle, alkyle, aryle, haloalkyle, alkoxy, haloalkoxy, alkylthio, haloalkylthio, alkoxyalkyle, haloalkoxyalkyle, alkylthioalkyle, haloalkylthioalkyle, cyanoalkyle, cyanoalkoxy, cyanoalkylthio, alkylsulfinyle, haloalkylsulfinyle, alkylsulfonyle, haloalkylsulfonyle et alkoxysulfonyle, cycloalkyle, alcényle, alcynyle, alcényloxy, alcynyloxy, alcénylthio, alcynylthio, amino, N-alkylamino, N,N-dialkylamino, acylamino, hydroxy, alkoxy, carboxy, carbamoyle, N-alkylcarbamoyle, N,N-dialkylcarbamoyle, alkoxycarbonyle, acyle.

De manière préférée, les dendrimères mis en oeuvre dans les compositions selon l'invention sont porteurs de liaisons entre atomes de la quinzième colonne de la classification périodique des éléments chimiques, la dite quinzième colonne ayant l'azote comme premier élément et le bismuth comme dernier élément. Plus préférentiellement, les dits dendrimères sont porteurs de liaisons entre atomes de phosphore et atomes d'azote.

Ces liaisons entre atomes de la quinzième colonne de la classification périodique des éléments chimiques peuvent être présentes dans les dendrimères utiles pour les compositions selon l'invention en des quantités allant de quelques unités à plusieurs milliers, voire plusieurs dizaines de milliers du fait de la taille importante que peuvent avoir les dits dendrimères, par exemple le nombre des dites liaisons peut être compris entre 2 et 80 000, de préférence compris entre 20 et 20 000.

Comme défini précédemment, le coeur organique des dendrimères utiles pour les compositions selon l'invention est, le plus souvent constitué d'un groupement chimique organique polyfonctionnel et susceptible d'être rattaché à de multiples chaînes ramifiées.

Le dit coeur peut également être caractérisé par une valence multiple qui correspond au nombre de dendrons auxquels il est susceptible d'être directement rattaché pour former un dendrimère dit de première génération.

De manière préférée, le coeur des dendrimères utilisés dans le cadre de l'invention possède une valence comprise entre 2 et 20, de préférence entre 3 et 10. Ainsi, les dendrimères selon l'invention dits de première génération peuvent être rattachés à un nombre de dendrons pouvant aller jusqu'à 20, de préférence jusqu'à 10.

Le plus souvent, le coeur des dendrimères selon les compositions de l'invention se compose d'un radical ou d'un groupe chimique plus ou moins complexe, il peut s'agir d'un radical hydrocarboné contenant généralement de 1 à 30 atomes et, le dit radical hydrocarboné peut être linéaire, ramifié ou cyclique voire polycyclique et/ou saturé ou insaturé et/ou substitué ou non.

Le coeur des dendrimères mis en oeuvre dans les compositions selon l'invention se compose habituellement d'un radical hydrocarboné contenant un ou plusieurs hétéroatomes, notamment de l'oxygène, du soufre, de l'azote, du phosphore ou encore des halogènes notamment du chlore. Le cas échéant et de manière préférée, le coeur des dendrimères selon l'invention contient jusqu'à 100%, en nombre d'atomes, des dits hétéroatomes.

A titre d'exemples de composés précurseurs de radicaux hétéroatomiques utiles comme coeur des dendrimères selon l'invention, on peut mentionner l'hexachloro-cyclotriphosphazène ou encore le trichlorothiophosphane ; une représentation de la structure chimique de ces deux composés est données ci-dessous par les figures (VI) et (VII).

Par composés précurseurs, on entend des composés pouvant précéder la formation ou la préparation des radicaux utiles comme coeur des dendrimères selon l'invention.

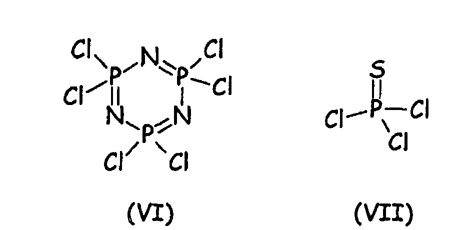

Comme définies plus haut, les branches ou dendrons des dendrimères selon l'invention sont, le plus souvent, constitués de chaînes organiques ramifiées liées au coeur des dits dendrimères.

Les dites chaînes organiques ramifiées sont habituellement composées de radicaux hydrocarbonés plus ou moins complexes, les dits radicaux hydrocarbonés peuvent également comprendre nombre d'hétéroatomes tels l'oxygène, le soufre, l'azote, le phosphore ou encore les halogènes notamment le chlore.

Généralement, les dits dendrons sont des séries des dites chaînes ramifiées, autrement dit, les dendrimères selon l'invention possèdent, le plus souvent, des dendrons qui sont composés de chaînes ramifiées contenant des motifs chimiques pour partie identiques ou similaires les uns aux autres.

Les dendrimères utiles dans le cadre de l'invention pouvant posséder un grand nombre de dendrons, le nombre des dits motifs chimiques identiques ou similaires est très varioble. De manière habituelle, les dendrimères selon les compositions de l'invention possèdent des dendrons qui sont composés de séries de chaînes ramifiées contenant des motifs chimiques parmi lesquels 10%, de préférence 20%, du nombre total de motifs chimiques sont identiques ou similaires les uns aux autres. En d'autres termes, les dendrons des dendrimères utilisés dans l'invention peuvent se composer de motifs chimiques dont les 9/10, de préférence les 4/5, sont différents les uns des autres.

Les dits motifs chimiques qui composent les dendrons des dendrimères utilisés pour les compositions selon l'invention peuvent par exemple être choisis parmi les groupements de type alkyle, aryle, alkoxyalkyle, alkoxyaryle, alkylhydrazinoyle, arylhydrazinoyle, carboxyalkyl-hydrazido et notamment carboxyméthyl-hydrazido, cyanoalkyle, allyle, propargyle, halocycloalkyle, haloalkoxyalkyle, alkylthioalkyle, haloalkylthioalkyle, aminoalkyle, N-alkylaminoalkyle, N,N-dialkylaminoalkyle, acylaminoalkyle, arylalkyle, phényle iminoalkyle, iminoaryle, imidoalkyle, amidoaryle, phosphoralkyle, phosphoryle, thiophosphoryle, phosphoraminoalkyle, phosphoraminoaryle, phosphoriminoalkyle, phosphoriminoaryle, phosphorimidoalkyle, phosphorimidoaryle, hydrazinoalkyle, hydrazinoaryle, allylidenealkylhydrazynoyle, allylidenearylhydrazinoyle, époxybenzylidene, dialkylphosporimidoyle, diarylphosphorimidoyle, thioimidophosphoryle, thio-N-alkylazophosphoryle, thio-N-arylazophosphoryle éventuellement substitué par un ou plusieurs groupes choisis parmi les groupements du type hydroxy, mercapto, nitro, thiocyanato, azido, cyano, pentafluorosulfonyle, alkyle, aryle, haloalkyle, alkoxy, haloalkoxy, alkylthio, haloalkylthio, alkoxyalkyle, haloalkoxyalkyle, alkylthioalkyle, haloalkylthioalkyle, cyanoalkyle, cyanoalkoxy, cyanoalkylthio, alkylsulfinyle, haloalkylsulfinyle, alkylsulfonyle, haloalkylsulfonyle et alkoxysulfonyle, cycloalkyle, alcényle, alcynyle, alcényloxy, alcynyloxy, alcénylthio, alcynylthio, amino, N-alkylamino, N,N-dialkylamino, acylamino, hydroxy, alkoxy, carboxy, carbamoyle, N-alkylcarbamoyle, N,N-dialkylcarbamoyle, alkoxycarbonyle, acyle.

Outre le coeur, les dendrons et les fonctions terminales, les dendrimères mis en oeuvre dans les compositions selon l'invention comprennent des cavités internes résultant, de façon inhérente, de l'existence des ramifications propres à la structure spatiale des dits dendrimères.

Les dites cavités internes peuvent notamment permettre l'inclusion de substances variées au sein de la structure arborescente des dits dendrimères. Toutefois, la taille et l'accessibilité de ces cavités internes limite l'inclusion des dites substances aux seules molécules dont la taille et les propriétés leurs sont compatibles.

A titre d'exemple purement illustratif, la figure (VIII) ci-dessous donne une représentation d'un tel dendrimère.

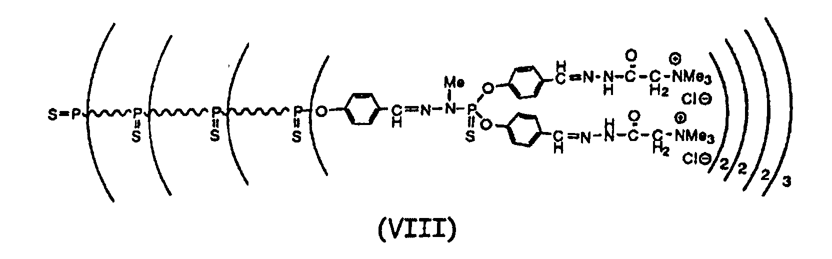

D'autre part et de part la variété et le nombre de fonctions terminales que peuvent comporter les dendrimères mis en oeuvre dans les compositions selon l'invention, les dits dendrimères peuvent être qualifiés de multiplurifonctionnalisés.

Ainsi, on qualifie de multiplurifonctionnalisé, un dendrimère mis en oeuvre dans les compositions selon l'invention qui porte à sa périphérie plusieurs fonctions terminales de natures chimiques différentes, d'où le préfixe pluri, et dont la pluralité des dites fonctions chimiques est répétée du fait des multiples fonctions terminales du dit dendrimère, d'où le préfixe multi.

Une représentation symbolique d'un tel dendrimère multiplurifonctionnalisé, plus précisément multitetrafonctionnalisé, pouvant être employé dans les compositions selon l'invention est donnée ci-dessous par la figure (IX) dans laquelle les symboles 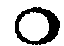 , ●, * et # représentent des fonctions terminales de quatre natures chimiques différentes et les lignes brisées les dendrons du dendrimère représenté.

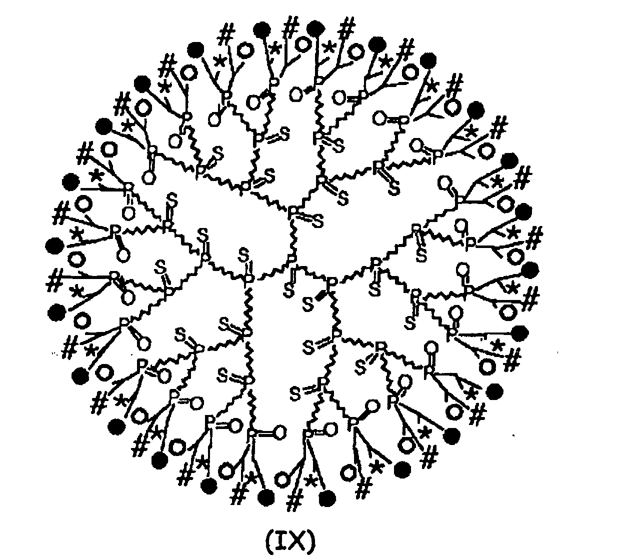

Les gels formés par les dendrimères utiles pour les compositions selon l'invention ont la particularité de pouvoir comprendre, au sein de leur structure, des volumes d'insertion, par exemple de matière active, de deux natures :
- les cavités internes propres à la structure ramifiée des dendrimères eux-mêmes ;
- les espaces, dits interstitiels, issus de la structure tridimensionnelle des dits gels que peuvent former les dits dendrimères.

En d'autres termes, les cavités internes sont dans les dendrimères mis en oeuvre dans les compositions selon l'invention tandis que les espaces interstitiels sont hors de la structure arborescente des dits dendrimères.

Les dites cavités internes des dendrimères selon les compositions de l'invention ont des dimensions, généralement, comprises entre 0,001 et 30nm³, de préférence entre 0,01 et 10nm³. L'unité de mesure permettant d'apprécier la taille de ces volumes correspond au volume d'un cube de 1nm (nanomètre) de côté.

Les espaces dits interstitiels des gels que peuvent former les dendrimères utiles pour les compositions selon l'invention ont des dimensions, en général, comprises entre 0,0005 et 50µm³, de préférence entre 0,001 et 20µm³. L'unité de mesure permettant d'apprécier la taille de ces volumes correspond au volume d'un cube de 1µm (micromètre ou micron) de côté.

Les dendrimères employés dans les compositions selon l'invention sont généralement compris dans les compositions selon l'invention en des quantités comprises entre 0,01 et 99,5%, de préférence entre 0,1 et 60%, en poids des dites compositions.

L'invention concerne encore des compositions utilisables dans les domaines de l'agriculture et/ou de l'hygiène publique ou domestique et contenant des dendrimères selon l'invention ainsi qu'une ou plusieurs matières actives localisées en tout ou partie dans les espaces interstitiels des dits dendrimères et, pour le reste, intégrées au sein des cavités internes des dits dendrimères.

Les compositions selon l'invention qui sont particulièrement avantageuses sont celles dont la moitié au moins de la matière active est contenue dans les espaces interstitiels des gels formés par les dendrimères selon l'invention.

Cette caractéristique des compostions selon l'invention de pouvoir intégrer une partie de la matière active au sein des espaces dits interstitiels, c'est-à-dire au sein de la structure des gels que peuvent former les dendrimères mis en oeuvre, est particulièrement intéressante lorsque la taille de la dite matière active rend difficile, voire impossible, sa localisation au sein des cavités internes des dits dendrimères.

L'invention concerne donc des compositions telles que décrites précédemment mais également des compositions selon l'invention comprenant plusieurs matières actives, en particulier plusieurs matières actives utilisables dans les domaines de l'agriculture et/ou de l'hygiène publique ou domestique, notamment plusieurs matières actives pesticides et/ou plusieurs matières actives régulatrices de croissance des plantes et/ou des insectes.

Les compositions selon l'invention associant ou combinant plusieurs des dites matières actives présentent un intérêt tout particulier lorsque les dites compositions permettent la mise en oeuvre de plusieurs matières actives possédant des spectres d'activité complémentaires ou bien encore lorsque les dites matières actives possèdent des propriétés telles que leur association ou leur combinaison peut permettre une amélioration notable de l'action respective de chacune de ces matières actives ou bien permettre une diminution de la quantité respective de chaque matière active utilisée, cette dernière qualité étant particulièrement importante pour des raisons écologiques aisément compréhensibles.

Ainsi, un intérêt tout particulier des compositions selon l'invention peut résider dans la possibilité d'associer ou de combiner plusieurs matières actives, notamment dans la possibilité d'associer ou de combiner une ou plusieurs substances de type insecticides et/ou acaricides et/ou rodenticides et/ou nématocides et/ou répulsive d'insectes et/ou d'animaux nuisibles à un ou plusieurs agents attracteurs des dits insectes ou animaux nuisibles.

Outre une ou plusieurs matières actives telles que définies plus haut et un ou plusieurs dendrimères susceptibles de former un gel, les compositions selon l'invention comprennent un support liquide, minéral ou organique.

Pour l'exposé de la présente invention, on entend le plus souvent par support liquide, minéral ou organique, aussi bien un solvant employé seul qu'une association de plusieurs solvants. Une telle association étant alors constituée d'un solvant et d'un ou plusieurs co-solvants miscibles ou non l'un à l'autre.

Comme solvants mis en oeuvre dans les compositions selon l'invention, on peut employer de l'eau et/ou des solvants organiques.

Lorsqu'on utilise de l'eau comme solvant dans les compositions selon l'invention, son pH peu indifféremment prendre des valeurs correspondant à un milieu basique qu'à un milieu acide, par exemple selon le type de dendrimère mis en oeuvre.

Les solvants organiques éventuellement employés pour les compositions selon l'invention sont des solvants organiques protiques ou aprotiques.

Parmi les solvants organiques utilisés pour les compositions selon l'invention, les solvants organiques polaires sont préférés, les dits solvants organiques sont avantageusement choisis parmi le glycérol, l'éthanol, l'acétonitrile, le tetrahydrofurane, le diméthylsulfoxyde, la N-méthylpyrrolidone ou la cyclohexanone.

Pour les compositions selon l'invention qui mettent en oeuvre un solvant et un ou plusieurs co-solvants, les quantités relatives de ces dits solvants et co-solvants varient dans des proportions du rapport solvant/co-solvant allant de 95/5 à 50/50.

Selon un mode de réalisation particulièrement avantageux, les compositions selon l'invention sont susceptibles de libérer de manière progressive et/ou contrôlée tout ou partie de la matière active utilisable notamment dans les domaines de l'agriculture et/ou de l'hygiène publique ou domestique qu'elles comprennent.

De manière très avantageuse, ces compositions selon l'invention sont susceptibles de libérer au moins 50%, de préférence au moins 80%, de la matière active utilisable notamment dans les domaines de l'agriculture et/ou de l'hygiène publique ou domestique qu'elles comprennent.

### Préparation des compositions selon l'invention

La présente invention concerne également les méthodes de préparation des compositions selon l'invention.

Les méthodes de préparation et de formulation des compositions selon l'invention font le plus souvent usage des techniques habituelles de la mise en formulation, toutefois, à titre d'exemple et afin de permettre une meilleure illustration de la présente invention, est donnée ci-dessous une méthode de préparation de compositions selon l'invention.

A défaut de toute autre mention, les quantités des différents constituants utilisés au cours des dites préparations sont exprimées en pourcentage en poids de composition préparée.

Ainsi, pour préparer les dites compositions, on commence généralement par mélanger au solvant, ou bien au mélange solvant/co-solvant(s), le ou les dendrimères susceptibles de former un gel en une quantité le plus souvent comprise entre 0,01 et 99,5%, de préférence entre 0,1 et 60%. Puis, au mélange ainsi réalisé, on ajoute la ou les matières actives en des quantités comprises entre 0,5 et 99,99%, de préférence entre 5 et 70%. Les additifs et adjuvants de formulation éventuellement mis en oeuvre dans les compositions selon l'invention peuvent être ajoutés lors de l'une ou l'autre des étapes précédemment décrites, l'homme de l'art saura déterminer l'étape la plus indiquée ainsi que les quantités utiles des dits additifs et adjuvants, les dites quantités étant avantageusement comprises entre 0 et 50%. Après stockage, pendant une durée le plus souvent comprise entre quelques heures et quelques semaines, à une température en général comprise entre la température ambiante et environ 80°C, de préférence comprise entre 30 et 70°C, le mélange ainsi réalisé permet d'obtenir les compositions selon l'invention.

Pour préparer les compositions selon la présente invention, on procède donc comme suit : mélange ou solubilisation, de préférence à chaud, de une ou plusieurs matières actives utilisables dans les domaines de l'agriculture et/ou de l'hygiène publique ou domestique, d'un ou plusieurs dendrimères susceptibles de former un gel et d'un support liquide, minéral ou organique, puis chauffage du dit mélange durant 0,25 à 45 jours, à une température d'environ 60-65°C, de préférence à une température d'environ 35-40°C.

### Compositions pulvérulentes utiles dans les domaines de l'agriculture et/ou de l'hygiène publique ou domestique

Un autre aspect de la présente invention concerne des compositions pulvérulentes utilisables dans les domaines de l'agriculture et/ou de l'hygiène publique ou domestique et qui, mélangées à un solvant ou support liquide, minéral ou organique, sont susceptibles de reprendre la forme de compositions sous forme gélifiée, les dites compositions sous forme gélifiée étant du type de celles décrites précédemment dans le présent texte.

Les compositions pulvérulentes selon l'invention peuvent être obtenues par élimination totale ou partielle du ou des solvants des compositions sous forme gélifiée selon l'invention décrites plus haut et contenant, outre le ou les solvants, une ou plusieurs matières actives pesticides et/ou régulatrices de croissance des plantes et/ou des insectes, un dendrimère selon l'invention susceptible de former un gel et, éventuellement, un ou plusieurs adjuvants et/ou additifs de formulation.

Ainsi, les dites compositions pulvérulentes selon l'invention peuvent, par exemple, contenir des agents anti-mottants, des colorants, des épaississants, des agents tensioactifs, des composés anti-mousse, des détergents tels les sels de métaux alcalino-terreux, des dispersants, des agents d'alcalinisation telles les bases, des agents d'adhésion, des émulsifiants, des agents oxydants tels que les capteurs de radicaux libres ou que des destructeurs catalytiques d'hydroperoxydes, des agents anti-corrosion, des substances attractives et/ou alimentaires pour la fabrication d'appâts, notamment insecticides.

Plus généralement, les compositions, pulvérulentes selon l'invention peuvent comprendre tous les additifs correspondants aux techniques de la mise en formulation et acceptables pour des usages dans les domaines de l'agriculture et/ou de l'hygiène publique ou domestique par exemple.

Les matières actives mises en oeuvre dans les compositions pulvérulentes selon l'invention sont les matières actives employées pour la formulation des compositions sous forme gélifiée selon l'invention et précédemment décrites en détail dans le présent texte. Ainsi, parmi les dites matières actives mises en oeuvre dans les compositions pulvérulentes selon l'invention, on peut mentionner l'ensemble de celles qui ont précédemment été citées comme exemples de matières actives que peuvent comprendre les compositions sous forme gélifiée selon l'invention.

La ou les matières actives des compositions pulvérulentes selon l'invention sont présentes en des quantités comprises entre 2 et 99,99%, de préférence entre 5 et 95% en poids des dites compositions pulvérulentes.

De même, les dendrimères mis en oeuvre dans les compositions pulvérulentes selon l'invention sont les dendrimères employés pour les compositions sous forme gélifiée selon l'invention et précédemment décrites.

De manière générale, les dits dendrimères ont pour principale caractéristique d'être susceptibles de former un gel tel que décrit précédemment et d'ainsi conférer aux compositions pulvérulentes selon l'invention leur propriété essentielle de permettre la reconstitution des compositions sous forme gélifiée selon l'invention.

Le ou les dendrimères utiles pour les compositions pulvérulentes selon l'invention peuvent être présents dans les dites compositions pulvérulentes en des quantités comprises entre 0,01 et 99,5%, de préférence entre 0,5 et 50%, en poids des dites compositions pulvérulentes.

Il a donc été découvert que les compositions sous forme gélifiée selon l'invention peuvent être débarrassées de tout ou partie du ou des solvants qu'elles comprennent, permettant ainsi la préparation des compositions pulvérulentes selon l'invention.

Comme techniques mises en oeuvre pour la préparation des dites compositions pulvérulentes selon l'invention, on peut citer la lyophilisation ou encore l'atomisation.

La lyophilisation a pour but d'obtenir des compositions pulvérulentes selon l'invention qui soient solides, friables, d'un aspect poreux, et se caractérisant essentiellement par une très grande avidité pour le ou les solvants pouvant être mis en oeuvre lors de la reconstitution, à partir des dites compositions pulvérulentes, des compositions sous forme gélifiée selon l'invention.

La lyophilisation consiste à extraire le ou les solvants contenus dans les compositions sous forme gélifiée selon l'invention, par interaction des techniques du vide et du froid. En effet, un cycle de lyophilisation peut comporter plusieurs phases, notamment une phase préalable de congélation de la composition à lyophiliser suivie d'une phase d'élimination du ou des solvants.

Le séchage par atomisation des compositions sous forme gélifiée selon l'invention peut s'effectuer de manière habituelle dans tout appareil connu tel que, par exemple, une tour d'atomisation associant une pulvérisation d'une dite composition sous forme gélifiée et réalisée par une buse ou une turbine, avec un courant de gaz chaud.

Les conditions de mise en oeuvre sont généralement fonction de la nature du ou des solvants à éliminer et/ou de la nature du ou des dendrimères selon l'invention employés et/ou de la thermosensibilité de la ou des matières actives mises en oeuvre ainsi que de l'atomiseur utilisé ; ces conditions sont généralement telles que la température de l'ensemble de la composition selon l'invention au cours du séchage ne dépasse pas 150°C, de préférence ne dépasse pas 110°C.

Les compositions pulvérulentes selon l'invention sont particulièrement avantageuses en ce que, par mélange à un ou plusieurs solvants appropriés, elles peuvent permettre la recomposition de compositions sous forme gélifiée selon l'invention.

De manière avantageuse, le ou les solvants utiles pour être mélangés aux compositions pulvérulentes selon l'invention peuvent être choisis parmi l'eau et/ou les solvants organiques.

Lorsque l'eau est employée comme solvant ajouté aux compositions pulvérulentes selon l'invention, son pH peu indifféremment prendre des valeurs correspondant à un milieu basique que des valeurs correspondant à un milieu acide, par exemple selon le type de dendrimère mis en oeuvre.

Les solvants organiques éventuellement ajoutés aux compositions pulvérulentes selon l'invention sont des solvants organiques protiques ou aprotiques.

Parmi les solvants organiques éventuellement ajoutés aux compositions pulvérulentes selon l'invention, les solvants organiques polaires sont préférés, les dits solvants organiques sont avantageusement choisis parmi le glycérol, l'éthanol, l'acétonitrile, le tetrahydrofurane , le diméthylsulfoxyde, la N-méthylpyrrolidone ou la cyclohexanone.

Outre la possibilité de pouvoir permettre la recomposition de compositions sous forme gélifiée selon l'invention, les compositions pulvérulentes selon l'invention sont particulièrement avantageuses en ce qu'elles peuvent être stockées pendant de longues périodes et en l'absence de tout soin, le tout sans altération substantielle de leurs caractéristiques.

Selon un autre mode de réalisation avantageux, les compositions pulvérulentes selon l'invention peuvent faire l'objet d'un broyage en vue d'aboutir à une granulométrie ou à une taille de particules adaptées à l'usage visée, notamment pour en faciliter l'épandage ou encore pour en améliorer l'efficacité biologique.

Par ailleurs, les dites compositions pulvérulentes selon l'invention peuvent également être incorporées ou mises en oeuvre au sein de nombreux types de formulations. Les dites formulations peuvent notamment être sous forme liquide ou sous forme solide ; ainsi parmi les dites formulations, on peut citer celles de type générateur d'aérosol; appât (prêt à l'emploi); concentré pour préparation d'appâts ; appât en stock ; suspension de capsules ; produit pour nébulisation a froid ; poudre pour poudrage ; concentré émulsionnable ; émulsion de type aqueux/aqueuse ; émulsion de type huileux/inverse ; granulé encapsulé ; granulé fin; suspension concentrée pour traitement de semences ; gaz comprimé ; produit générateur de gaz ; appât sur grain ; appât granulé ; granulé ; produit pour nébulisation a chaud ; macrogranulé ; microgranulé ; poudre à disperser dans l'huile ; suspension concentrée diluable dans l'huile; liquide miscible dans l'huile; pâte ; bâtonnet à usage agropharmaceutique ; appât en plaquette; poudre pour traitement de semences à sec ; appât sur brisures ; semences traitées ou enrobées ; bougie fumigène ; cartouche fumigène; fumigène; granulé fumigène; bâtonnet fumigène; comprimé fumigène; boite fumigène; concentré soluble; poudre soluble ; liquide pour traitement de semences ; suspension concentrée (= concentré fluidifiable) ; poudre de piste ; liquide pour application à très bas volume ; suspension pour application à très bas volume ; produit diffuseur de vapeur ; granulés ou comprimés à disperser dans l'eau ; poudre mouillable pour traitement humide ; granulés ou comprimés solubles dans l'eau; poudre soluble pour traitement de semences ; poudre mouillable.

Selon un autre mode de réalisation, les compositions pulvérulentes selon l'invention sont susceptibles d'être obtenues par séchage puis découpage, broyage, effritement, hâchage de compositions gélifiées selon l'invention.

Selon d'autres modes de réalisation avantageux, les compositions pulvérulentes selon l'invention peuvent prendre la forme de pastilles, d'amas, d'agrégats de taille variable selon l'usage considéré, ou encore de cristaux qui, tous, peuvent être employés tels quels, notamment par épandage, dispersion ou autres formes d'application appropriées.

Selon un mode de réalisation également particulièrement avantageux, les compositions pulvérulentes selon l'invention sont susceptibles de libérer de manière progressive et/ou contrôlée tout ou partie de la matière active utilisable notamment dans les domaines de l'agriculture et/ou de l'hygiène publique ou domestique qu'elles comprennent.

De manière encore plus avantageuse, ces compositions pulvérulentes selon l'invention sont susceptibles de libérer au moins 50%, de préférence au moins 80%, de la matière active utilisable notamment dans les domaines de l'agriculture et/ou de l'hygiène publique ou domestique qu'elles comprennent.

### Dendrimères

Les gels qui sont susceptibles d'être formés par les dendrimères , sont des colloïdes de phase substantiellement continue et qui donnent un produit visqueux de type gelée ; il peut également s'agir d'un système dispersé comprenant par exemple un composé de poids moléculaire élevé ou un agrégat de molécules de dendrimères objets de l'invention, en association intime avec un liquide.

Comme cela a déjà pu être mentionné plus haut dans le présent exposé, les dendrimères sont des macromolécules constituées d'une partie centrale, le coeur, auquel sont liées des séries de chaînes ramifiées, les dendrons.

Les dits dendrimères possèdent le plus souvent une structure arborescente, la dite structure comprenant
- un coeur, en général constitué d'un groupement chimique polyfonctionnel et capable d'être lié à une pluralité de chaînes ramifiées ;
- des branches, généralement composées de fragments organiques linéaires ou ramifiés, liées entre elles et au coeur, et organisées de manière arborescente ;
- des fonctions chimiques terminales, c'est-à-dire constituant l'extrémité périphérique des branches ;
- des cavités internes résultant, de façon inhérente, des ramifications des dites branches.

Le coeur organique est donc la partie centrale des dendrimères. Il est, en général, constitué d'un groupement chimique, le plus souvent organique, polyfonctionnel et susceptible d'être rattaché à de multiples chaînes ramifiées.

Le coeur des dendrimères est également caractérisé par une valence multiple qui correspond au nombre de dendrons auxquels il est susceptible d'être rattaché.

Comme défini précédemment, le coeur organique des dendrimères est, le plus souvent, constitué d'un groupement chimique organique polyfonctionnel et susceptible d'être rattaché à de multiples chaînes ramifiées.

Le dit coeur peut également être caractérisé par une valence multiple qui correspond au nombre de dendrons auxquels il est susceptible d'être directement rattaché pour former un dendrimère dit de première génération.

De manière préférée, le coeur des dendrimères possède une valence comprise entre 2 et 20, de préférence entre 3 et 10. Ainsi, les dendrimères dits de première génération peuvent être rattachés à un nombre de dendrons pouvant aller jusqu'à 20, de préférence jusqu'à 10.

Le plus souvent, le coeur des dendrimères se compose d'un radical ou d'un groupe chimique plus ou moins complexe, il peut s'agir d'un radical hydrocarboné contenant généralement de 1 à 30 atomes et, le dit radical hydrocarboné peut être linéaire, ramifié ou cyclique voire polycyclique et/ou saturé ou insaturé et/ou substitué ou non.

Le coeur des dendrimères se compose habituellement d'un radical hydrocarboné contenant un ou plusieurs hétéroatomes, notamment de l'oxygène, du soufre, de l'azote, du phosphore ou encore des halogènes notamment du chlore. Le cas échéant et de manière préférée, le coeur des dendrimères contient jusqu'à 100%, en nombre d'atomes, des dits hétéroatomes.

A titre d'exemples de composés précurseurs de radicaux hétéroatomiques utiles comme coeur des dendrimères, on peut mentionner l'hexachloro-cyclotriphosphazène ou encore le trichlorothiophosphane ; une représentation de la structure chimique de ces deux composés est données ci-dessous par les formules (VI) et (VII).

Par composés précurseurs, on entend des composés pouvant précéder la formation ou la préparation des radicaux utiles comme coeur des dendrimères.

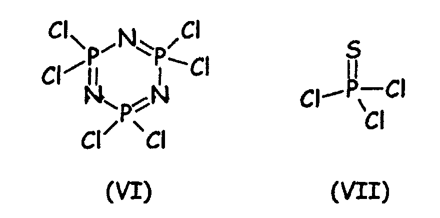

Les dendrons des dendrimères sont des chaînes organiques ramifiées liées au coeur. Généralement, les dits dendrons sont des séries des dites chaînes ramifiées.

Les dites chaînes ramifiées sont habituellement composées de radicaux hydrocarbonés plus ou moins complexes, les dits radicaux hydrocarbonés peuvent également comprendre nombre d'hétéroatomes tels l'oxygène, le soufre, l'azote, le phosphore ou encore les halogènes notamment le chlore.

Généralement, les dits dendrons sont des séries des dites chaînes ramifiées, autrement dit les dendrimères objets de l'invention possèdent, le plus souvent, des dendrons qui sont composés de chaînes ramifiées contenant des motifs chimiques pour partie identiques ou similaires les uns aux autres.

Les dendrimères pouvant posséder un grand nombre de dendrons, le nombre des dits motifs chimiques identiques ou similaires est très variable. De manière habituelle, les dendrimères possèdent des dendrons qui sont composés de séries de chaînes ramifiées contenant des motifs chimiques parmi lesquels 10%, de préférence 20%, du nombre total des dits motifs chimiques sont identiques ou similaires. En d'autres termes, les dendrons des dendrimères se composent le plus souvent de motifs chimiques dont les 9/10, de préférence les 4/5, sont différents les uns des autres.

Les dits motifs chimiques qui composent les dendrons des dendrimères sont le plus souvent choisis parmi les groupements de type alkyle, aryle, alkoxyalkyle, alkoxyaryle, alkylhydrazinoyle, arylhydrazinoyle, carboxyalkyl-hydrazido et notamment carboxyméthyl-hydrazido, cyanoalkyle, allyle, propargyle, halocycloalkyle, haloalkoxyalkyle, alkylthioalkyle, haloalkylthioalkyle, aminoalkyle, N-alkylaminoalkyle, N,N-dialkylaminoalkyle, acylaminoalkyle, arylalkyle, phényle iminoalkyle, iminoaryle, imidoalkyle, amidoaryle, phosphoralkyle, phosphoryle, thiophosphoryle, phosphoraminoalkyle, phosphoraminoaryle, phosphoriminoalkyle, phosphoriminoaryle, phosphorimidoalkyle, phosphorimidoaryle, hydrazinoalkyle, hydrazinoaryle, allylidenealkylhydrazynoyle, allylidenearylhydrazinoyle, époxybenzylidene, dialkylphosporimidoyle, diarylphosphorimidoyle, thioimidophosphoryle, thio-N-alkylazophosphoryle, thio-N-arylazophosphoryle éventuellement substitué par un ou plusieurs groupes choisis parmi les groupements du type hydroxy, mercapto, nitro, thiocyanato, azido, cyano, pentafluorosulfonyle, alkyle, aryle, haloalkyle, alkoxy, haloalkoxy, alkylthio, haloalkylthio, alkoxyalkyle, haloalkoxyalkyle, alkylthioalkyle, haloalkylthioalkyle, cyanoalkyle, cyanoalkoxy, cyanoalkylthio, alkylsulfinyle, haloalkylsulfinyle, alkylsulfonyle, haloalkylsulfonyle et alkoxysulfonyle, cycloalkyle, alcényle, alcynyle, alcényloxy, alcynyloxy, alcénylthio, alcynylthio, amino, N-alkylamino, N,N-dialkylamino, acylamino, hydroxy, alkoxy, carboxy, carbamoyle, N-alkylcarbamoyle, N,N-dialkylcarbamoyle, alkoxycarbonyle, acyle.

Les fonctions terminales des dendrimères sont des fonctions chimiques présentes aux extrémités des dendrons des dits dendrimères, parmi les très nombreuses fonctions chimiques qui peuvent constituer les dites fonctions terminales, on peut, par exemple, citer les fonctions ammonium, amidinium, pyridinium, guanidinium, carboxylate ou encore les acides carboxyliques. Les dites fonctions terminales confèrent habituellement aux dendrimères certaines de leurs caractéristiques, notamment la possibilité de très nombreuses réactions individuelles en périphérie.

Les fonctions terminales des dendrimères sont rattachées aux extrémités des chaînes ramifiées que constituent les branches des dits dendrimères, soit directement, soit par le moyen d'un résidu organique appelé maillon de connexion pour le présent exposé.

Le dit maillon de connexion des dendrimères se compose le plus souvent d'un radical hydrocarboné contenant de 2 à 50 atomes de carbone, de préférence de 4 à 20 atomes de carbone, le dit radical pouvant être saturé ou insaturé et/ou linéaire ou ramifié et/ou substitué ou non.

Le dit maillon de connexion peut également se composer d'un radical hydrocarboné tel que défini ci-dessus et contenant, outre des atomes de carbone, un ou plusieurs hétéroatomes, notamment de l'oxygène, du soufre, de lazote, du phosphore, des halogènes ou tout autre élément utiles pour conférer aux dendrimères objets de l'invention les propriétés les caractérisant, notamment leur réactivité chimique.

Comme maillons de connexion utiles pour les dendrimères on peut citer les groupements de type alkyle, aryle, alkoxyalkyle, alkoxyaryle, alkylhydrazinoyle, arylhydrazinoyle, carboxyalkyl-hydrazido et notamment carboxyméthyl-hydrazido, cyanoalkyle, allyle, propargyle, halocycloalkyle, haloalkoxyalkyle, alkylthioalkyle, haloalkylthioalkyle, aminoalkyle, N-alkylaminoalkyle, N,N-dialkylaminoalkyle, acylaminoalkyle, arylalkyle, phényle iminoalkyle, iminoaryle, imidoalkyle, amidoaryle, phosphoalkyle, phosphoryle, thiophosphoryle, phosphoraminoalkyle, phosphoraminoaryle, phosphoriminoalkyle, phosphoriminoaryle, phosphorimidoalkyle, phosphorimidoaryle, hydrazinoalkyle, hydrazinoaryle, allylidenealkylhydrazynoyle, allylidenearylhydrazinoyle, époxybenzylidene, dialkylphosporimidoyle, diarylphosphorimidoyle, thioimidophosphoryle, thio-N-alkylazophosphoryle, thio-N-arylazophosphoryle éventuellement substitué par un ou plusieurs groupes choisis parmi les groupements du type hydroxy, mercapto, nitro, thiocyanato, azido, cyano, pentafluorosulfonyle, alkyle, aryle, haloalkyle, alkoxy, haloalkoxy, alkylthio, haloalkylthio, alkoxyalkyle, haloalkoxyalkyle, alkylthioalkyle, haloalkylthioalkyle, cyanoalkyle, cyanoalkoxy, cyanoalkylthio, alkylsulfinyle, haloalkylsulfinyle, alkylsulfonyle, haloalkylsulfonyle et alkoxysulfonyle, cycloalkyle, alcényle, alcynyle, alcényloxy, alcynyloxy, alcénylthio, alcynylthio, amino, N-alkylamino, N,N-dialkylamino, acylamino, hydroxy, alkoxy, carboxy, carbamoyle, N-alkylcarbamoyle, N,N-dialkylcarbamoyle, alkoxycarbonyle, acyle.

Outre le coeur, les dendrons et les fonctions terminales, les dendrimères comprennent des cavités internes résultant, de façon inhérente, de l'existence des ramifications propres à la structure spatiale des dits dendrimères.

Les dites cavités internes permettent notamment l'inclusion de substances variées au sein de la structure arborescente des dendrimères objets de l'invention. Toutefois, la taille et l'accessibilité de ces cavités internes limite l'inclusion des dites substances aux seules molécules dont la taille et les propriétés leurs sont compatibles.

Les dites cavités internes des dendrimères ont des dimensions, généralement, comprises entre 0,001 et 30nm³, de préférence entre 0,01 et 10nm³.

Les dendrimères peuvent être des dendrimères neutres ou des dendrimères de type ionique, indifféremment de type anionique ou cationique.

Comme dendrimères qui sont neutres, on peut citer ceux dont les fonctions terminales sont principalement constituées de groupements de type acide carboxylique et/ou de type phosphonique et/ou de type sulfonique, sulfonate ou sulfate et/ou de type amine.

Comme dendrimères qui sont de type ionique, on peut avantageusement mentionner les dendrimères dont les fonctions terminales sont essentiellement constituées de groupements choisis parmi les groupements carboxylate et/ou sulfonium et/ou phosphonium et/ou amidinium et/ou guanidinium et/ou ammonium, par exemple les groupements de type ammonium secondaire, tertiaire ou quaternaire, tout particulièrement les groupements de type pyridinium.

Comme dendrimères qui sont tout particulièrement avantageux, on peut mentionner les dits dendrimères dont les fonctions terminales comprennent essentiellement des groupements de type halogénure de N-hydrazinoyl-carbonyl-méthyl-N,N,N-trialkylammonium, groupements parmi lesquels on peut, à titre d'exemple, citer le chlorure de N-hydrazinoyl-carbonyl-méthyl-N,N,N-tri-(n-propyl)ammonium, appelé réactif de Girard PR, ou le chlorure de N-hydrazinoyl-carbonyl-méthyl-N,N,N-triméthylammonium représenté par la figure (V) ci-dessous et dit réactif de Girard T, de même que l'on peut mentionner le chlorure de N-hydrazinoyl-carbonyl-méthyl-N,N,N-pyridinium appelé réactif de Girard P.

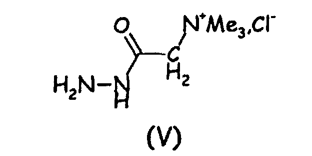

De manière préférée, les dendrimères sont porteurs de liaisons entre atomes de la quinzième colonne de la classification périodique des éléments chimiques, la dite quinzième colonne étant telle que définie précédemment au cours du présent exposé. Plus préférentiellement, les dits dendrimères sont porteurs de liaisons entre atomes de phosphore et atomes d'azote.

Ces liaisons entre atomes de la dite quinzième colonne de la classification périodique des éléments chimiques peuvent être présentes dans les dendrimères en des quantités allant de quelques unités à plusieurs milliers, voire plusieurs dizaines de milliers du fait de la taille importante que peuvent avoir les dits dendrimères, par exemple le nombre des dites liaisons peut être compris entre 2 et 80 000, de préférence compris entre 20 et 20 000.

A titre d'exemple purement illustratif, la figure (VIII) donne une représentation d'un dendrimère.

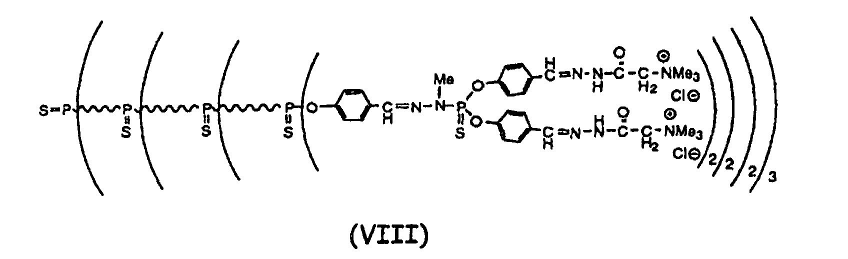

Outre le fait d'avoir comme caractéristique essentielle d'être susceptibles de former des gels, les dendrimères permettent, le plus souvent, la formation des gels qui ont pour particularité de pouvoir comprendre au sein de leur structure, des volumes d'insertion de deux natures :
- les cavités internes propres à la structure ramifiée des dendrimères eux-mêmes ;
- les espaces, dits interstitiels, issus de la structure tridimensionnelle des dits gels que peuvent former les dits dendrimères.

En d'autres termes, les cavités internes sont au sein même des dendrimères tandis que les espaces interstitiels sont hors de la structure arborescente des dits dendrimères.

Les dites cavités internes des dendrimères ont, généralement, des dimensions comprises entre 0,001 et 30nm³, de préférence entre 0,01 et 10nm³.

Les espaces dits interstitiels des gels que peuvent former les dendrimères ont des dimensions comprises, en général, entre 0,0005 et 50µm³, de préférence entre 0,001 et 20µm³.

Selon un autre mode de réalisation particulièrement avantageux de l'invention, les dendrimères peuvent être utilisés pour encapsuler des substances actives, préférentiellement pour encapsuler des substances actives non hydrosolubles ou faiblement hydrosolubles.

On qualifie de non ou faiblement hydrosolubles, des substances dont la solubilité dans l'eau ou dans un solvant substantiellement aqueux rend ces substances particulièrement difficiles à utiliser ou encore des substances dont les propriétés actives utiles sont substantiellement réduites du fait de cette difficulté ou de cette impossibilité de les solubiliser efficacement.

### Préparation des dendrimères

Pour la préparation des dits dendrimères et comme cela a déjà été mentionné dans le présent texte, on peut, principalement, citer deux types de méthodes, les synthèses divergentes et les synthèses convergentes :
- dans les méthodes divergentes, la synthèse s'effectue du coeur vers la périphérie en greffant un nombre de plus en plus grand de petites molécules sur la surface du dendrimère possédant de multiples fonctions chimiques, une représentation d'une telle voie de synthèse est donnée par le schéma (III) ;
- dans les méthodes convergentes, la synthèse s'effectue de la périphérie vers le coeur en associant entre elles des molécules de plus en plus grosses et ayant en permanence une fonction chimique disponible au niveau du coeur, une représentation d'une telle voie de synthèse est donnée par le schéma (IV).

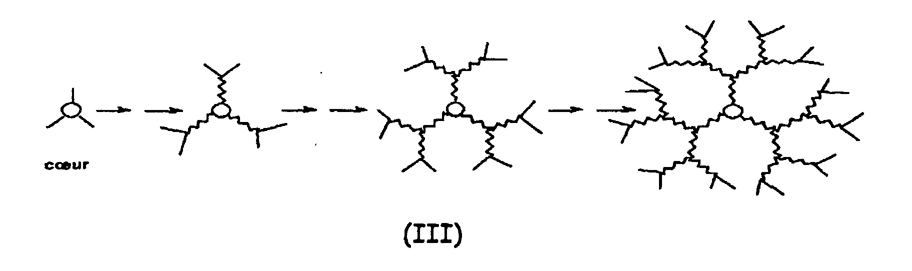

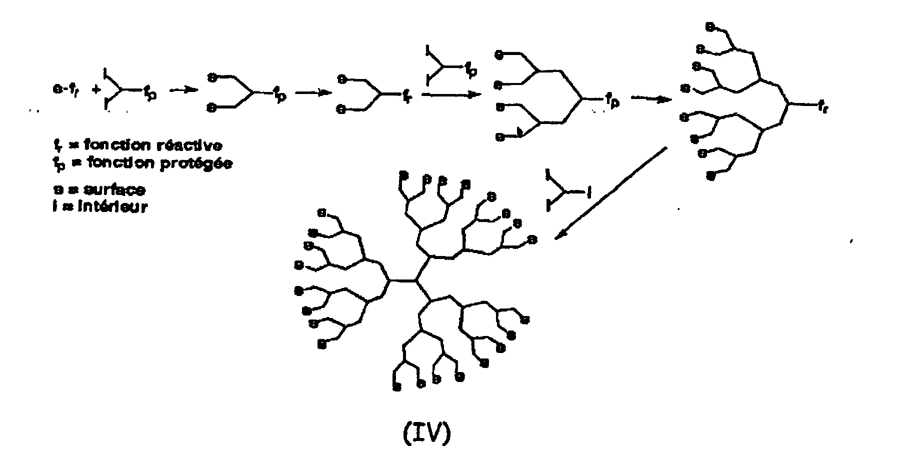

De manière préférée, la préparation des dendrimères met en oeuvre les voies de synthèse dites divergentes, c'est-à-dire les voies de synthèse pour lesquelles la croissance des dits dendrimères s'effectue du coeur vers la périphérie des dits dendrimères, le plus souvent par des réactions en cascade.

Plus préférentiellement, la préparation des dendrimères est caractérisée par le fait de faire réagir un dendrimère dont les fonctions terminales sont essentiellement constituées de fonction de type aldéhyde avec un réactif dit de Girard tel que précédemment décrit, de préférence un réactif de Girard T porteur d'un groupement triméthyl-ammonium ou un réactif de Girard PR porteur d'un groupement tri-(n-propyl)-ammonium ou encore un réactif dit de Girard P porteur d'un groupement pyrridinium.

A titre d'exemple, une méthode de préparation du dendrimère représenté par la figure (X) ci-dessous, est donnée plus avant dans le présent texte.

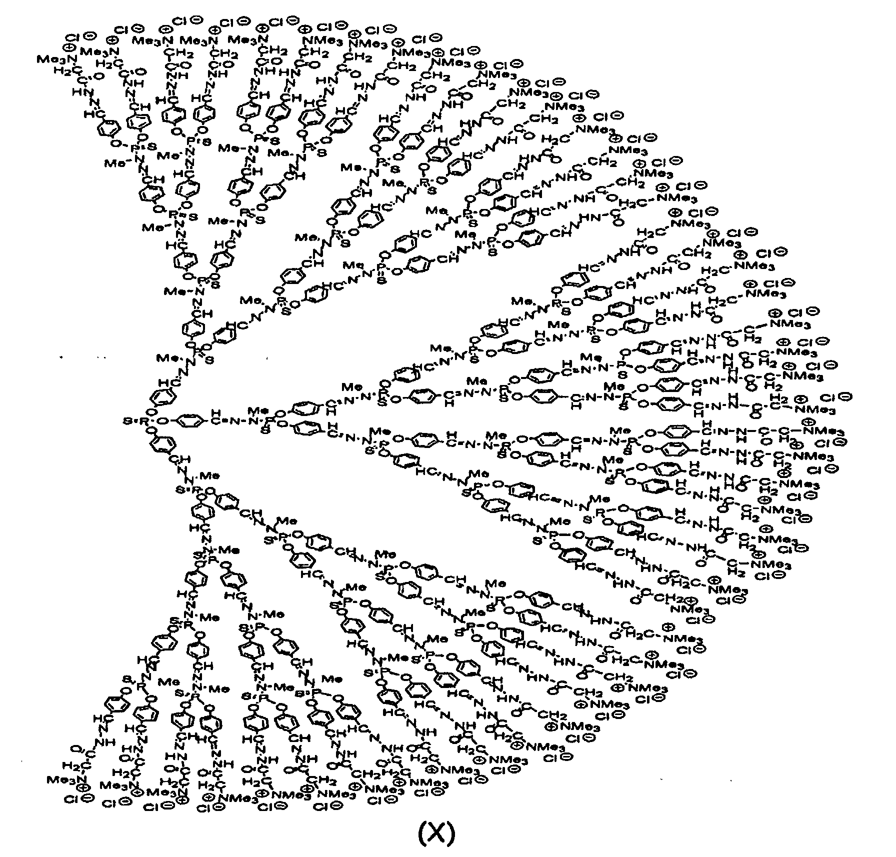

Pour faciliter la compréhension de la suite du présent exposé, le dendrimère représenté par la figure (X) et dont les fonctions terminales comprennent des radicaux chimiques issus de réactifs de Girard T est appelé dendrimère G'4-T.

Pour la préparation du dit dendrimère G'4-T, on utilise habituellement un dendrimère dit G'4-CHO dont les fonctions terminales comprennent essentiellement des groupements de type aldéhyde en périphérie, de préférence toutes les dites fonctions terminales sont constituées de groupements de type aldéhyde en périphérie ; le dit dendrimère G'4-CHO peut être préparé en se référant aux indications données dans l'ouvrage Les dendrimères précédemment cité dans le présent exposé. Pour la préparation du dit dendrimère G'4-CHO, on peut par exemple suivre le schéma réactionnel représenté par la figure (XI) ci-dessous.

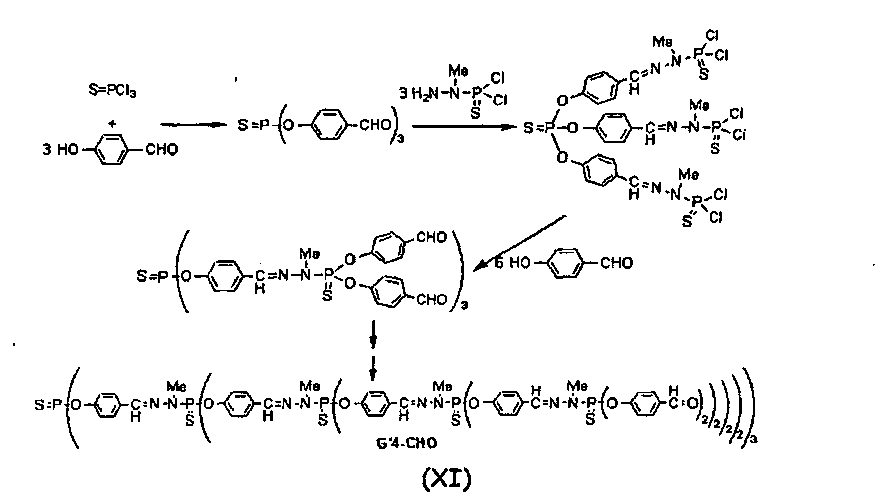

On peut ensuite faire réagir le dit dendrimère *G*'4-CHO en présence de réactif dit de Girard T tel que décrit précédemment dans le présent texte et dont une représentation est donnée ci-dessous par la figure (V), et ainsi obtenir le dendrimère dit G'4-T.

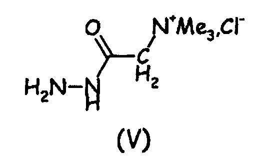

En utilisant une méthode de préparation similaire à celle précédemment décrite pour la préparation de dendrimère *G*'4-T, on peut préparer un dendrimère dit G'4-P dont les fonctions terminales comprennent des radicaux chimiques issus de réactifs de Girard P.

Les méthodes de traitement et/ou de protection mettant en oeuvre les compositions selon l'invention décrites dans le présent exposé font également partie de la dite invention. Parmi les dites méthodes de traitement, celles qui sont préférées sont celles de traitement ou de protection utiles dans les domaines de l'agriculture et/ou de l'hygiène publique ou domestique.

### Méthodes de traitement et/ou de protection utiles dans le domaine de l'agriculture, notamment pour le traitement des cultures

Les méthodes de traitement ou de protection des cultures selon l'invention ont pour caractéristique essentielle de comprendre l'étape de mettre en oeuvre une quantité efficace et non phytotoxique d'une ou plusieurs compositions selon l'invention.

Par l'expression quantité efficace et non phytotoxique, on entend au sens du présent exposé, une quantité de composition selon l'invention suffisante pour permettre le contrôle et/ou la destruction et/ou l'éradication, notamment des maladies et/ou des champignons et/ou des végétaux nuisibles et/ou des insectes ou animaux nuisibles présents ou susceptibles d'apparaître sur les cultures, ainsi que pour permettre un contrôle satisfaisant de la croissance des dites cultures, et n'entraînant pour les dites cultures aucun symptôme de phytotoxicité.

Une telle quantité est susceptible de varier dans des limites assez larges, notamment selon les cultures traitées, les besoins, la nature des maladies à traiter, des insectes et/ou animaux nuisibles, des végétaux nuisibles, à combattre, détruire ou éradiquer, les degrés d'infestation de ces nuisibles, les conditions climatiques et/ou édaphiques, et la ou les matières actives comprises dans la ou les compositions selon l'invention mises en oeuvre.

Les compositions selon l'invention sont le plus souvent mises en oeuvre en des quantités comprises entre 1g/ha et 5kg/ha.

Les méthodes de traitement et/ou de protection des cultures selon l'invention peuvent, notamment, mettre en oeuvre les compositions selon l'invention préalablement diluées ou dispersées dans une quantité appropriée d'eau.

### Méthodes de traitement utiles dans le domaine de l'hygiène publique ou domestique

Pour ce qui concerne les méthodes de traitement ou de protection selon l'invention utiles en hygiène publique ou domestique, elles sont principalement caractérisées par la mise en oeuvre d'une ou plusieurs compositions selon l'invention décrites plus haut, particulièrement une ou plusieurs des dites compositions sous forme gélifiée.

Les dites méthodes de traitement utiles en hygiène publique ou domestique mettent en oeuvre des quantités efficaces des dites compositions pour permettre de combattre, détruire ou éradiquer les insectes et/ou animaux nuisibles présents ou susceptibles d'apparaître, mais également des quantités efficaces de compositions selon l'invention contenant une ou plusieurs matières actives régulatrices de la croissance des dits insectes et/ou animaux nuisibles.

Les dites quantités peuvent varier, notamment selon le degré d'infestation de ces insectes et/ou animaux nuisibles à combattre, détruire ou éradiquer ou encore selon les conditions climatiques ou encore selon la matière active pesticide et/ou régulatrice de croissance mise en oeuvre. Des quantités de composition selon l'invention, notamment sous la forme d'appâts, de l'ordre de 0,1 à 200g/m² conviennent généralement bien.

De manière avantageuse, les différentes méthodes de traitement et/ou de protection selon l'invention qui ont été décrites, tant celles qui mettent en oeuvre une composition gélifiée selon l'invention que celles faisant usage d'une composition pulvérulente selon l'invention, peuvent mettre en oeuvre les dites compositions sous de nombreuses formes et notamment sous forme broyée, hachée, découpée, tronçonnée, écrasée, aplatie, comprimée, pressée, pilée, laminée, pulvérisée, moulue, concassée, désagrégée, émiettée, dispersée, coupée, divisée, sectionnée, tranchée ou fractionnée.

Des exemples sont donnés ci-dessous afin de permettre une meilleure illustration des différents aspects de la présente invention.

Les exemples 1 et 2 donnent une illustration de méthodes de préparation de compositions selon l'invention, tandis que l'exemple 3 permet d'illustrer l'aspect de la présente invention relatif à la préparation des dendrimères objets de la dite invention.

### Exemple 1 :

Pour la préparation d'une composition selon l'invention on procède comme suit : à 724g d'eau, on ajoute 35g de dendrimère de formule (X) appelé *G*'4-T, 50g de propylèneglycol comme agent antigel, 5g d'un agent mouillant de type polyalcool éthoxylé et 6g d'un agent anti-mousse de type huile siliconée. bans la solution obtenue, on disperse 200g de Fenamidone, matière active fongicide dont le nom chimique est la (4-S)-4-méthyl-2-méthylthio-4-phényl-1-phénylamino-2-imidazoline-5-one. On ajoute ensuite 25g d'un agent épaississant de type silico-aluminate. Après stockage pendant 14 jours à 54°C du mélange précédemment réalisé, on obtient une composition selon l'invention.

### Exemple 2 :

On reproduit la méthode de préparation de l'exemple 1 en remplaçant les 200g de matière active fongicide par 200g d'une matière active insecticide, le Fipronil de nom chimique 5-amino-3-cyano-1-(2,6-dichloro-4-trifluoromethyl)phenyl-4-trifluoromethylsulfinylpyrazole et les 35g de dendrimère *G*'4-T par 35g de dendrimère G'4-P tel que précédemment décrit et dont les fonctions terminales comprennent essentiellement des radicaux issus de réactifs dits de Girard P porteurs de groupements pyridinium. On obtient une composition sous forme gélifiée selon l'invention qui, appliquée à raison d'environ 0,1g de matière active pour 100m² de surface à protéger, constitue un appât efficace contre les cafards, en particulier de type *Germanica blatella.*

### Exemple 3 :

Cet exemple se propose de donner une illustration particulière de l'aspect de la présente invention relatif à la préparation d'une composition selon l'invention.

A une formulation connue (200 g/l de Fipronil comme matière active insecticide, 400g/l d'huile de maïs raffinée, 50g/l de propylène glycol comme agent antigel, 13g/l d'un agent émulsifiant, 25g/l d'un agent dispersant, 5g/l d'un agent mouillant, 8g/l d'un autre agent mouillant, 5g/l d'un agent antimousse, 344g/l d'eau comme support liquide) de type concentré fluidifiable comprenant 200g/l de Fipronil comme matière active, on ajoute à une température d'environ 45°C 1,8% en masse de dendrimère *G*4-P.

On place ensuite le mélange obtenu dans une étuve à une température d'environ 60-65°C.

Après deux jours, on obtient une composition selon l'invention qui est sous la forme d'un gel sécable.

### Exemple 4 :

Pour la préparation du dendrimère G'4-T représenté par la figure (X), on peut procéder de la manière suivante : à 10g de dendrimère G'4-CHO dissous dans 190ml de tetrahydrofurane, on ajoute 100ml d'une solution aqueuse contenant 5,23g de réactif dit de Girard T. Le milieu réactionnel ainsi obtenu est maintenu sous agitation à température ambiante durant environ 15 heures. Après quoi, le dit milieu réactionnel est chauffé à 35°C pendant 4 jours environ. On élimine ensuite les solvants du dit milieu réactionnel, puis on lave avec 300ml de tetrahydrofurane et sous agitation le solide ainsi obtenu. On obtient ainsi le dendrimère G'4-T sous la forme d'une poudre d'aspect blanc qui est ensuite séchée. Le rendement global de la présente méthode de préparation est quantitatif.

## Revendications

1. Composition gélifiée utilisable dans les domaines de l'agriculture et/ou de l'hygiène publique ou domestique **caractérisée en ce qu'**elle comprend
- une ou plusieurs matières actives utilisables dans les dits domaines ;
- un ou plusieurs dendrimères gélifiables ;
- un support liquide, minéral ou organique.

2. Composition selon la revendication 1, **caractérisée en ce qu'**elle comprend une ou plusieurs matières actives pesticides notamment de type herbicide et/ou fongicide et/ou insecticide et/ou acaricide et/ou rodenticide et/ou nématocide et/ou répulsive d'insectes et/ou d'animaux nuisibles, et/ou une ou plusieurs matières actives régulatrices de croissance des plantes et/ou des insectes.

3. Composition selon l'une quelconque des revendications 1 et 2, **caractérisée en ce qu'**elle comprend un ou plusieurs additifs et/ou adjuvants et/ou agents anti-mottants et/ou colorants et/ou épaississants et/ou agents tensioactifs et/ou composés anti-mousse et/ou détergents et/ou agents d'alcalinisation et/ou agents d'adhésion et/ou émulsifiants et/ou dispersants et/ou agents oxydants et/ou agents anticorrosion et/ou substances attractives et/ou substances alimentaires.

4. Composition selon l'une quelconque des revendications 1 à 3 **caractérisée en ce que** la ou les matières actives sont présentes en des quantités comprises entre 0,5 et 99,99% en poids.

5. Composition selon la revendication 4, **caractérisée en ce que** la ou les matières actives sont présentes en des quantités comprises entre 5 et 70% en poids

6. Composition selon l'une quelconque des revendications 1 à 3, **caractérisée en ce qu'**elle comprend une quantité de dendrimère comprise entre 0,01 et 99,5% en poids.

7. Composition selon la revendication 6, **caractérisée en ce qu'**elle comprend une quantité de dendrimère comprise entre 0,1 et 60% en poids.

8. Composition selon l'une quelconque des revendications 1 à 7, **caractérisée en ce qu'**elle comprend un dendrimère qui, mélangé à de l'eau, ou solubilisé dans de l'eau, en proportions pondérales respectives 1,5/98,5, à une température d'environ 65°C, permet, après 48 heures, d'obtenir un produit gélifié qui ne coule pas lorsqu'il est posé, à l'état de masse cubique, sur une surface plane.

9. Composition selon l'une quelconque des revendications 1 à 7, **caractérisée en ce qu'**elle comprend un dendrimère qui, mélangé à de l'eau, ou solubilisé dans de l'eau, en proportions pondérales respectives 1/1, à température ambiante, permet, après deux semaines, d'obtenir un produit gélifié qui ne coule pas lorsqu'il est posé, à l'état de masse cubique, sur une surface plane.

10. Composition selon l'une quelconque des revendications 1 à 7, **caractérisée en ce qu'**elle comprend un dendrimère qui, après mélange à de l'eau, ou solubilisation dans de l'eau, en proportions pondérales respectives 1,8/98,2, à une température qui peut être comprise entre 40 et 65°C, puis chauffage pendant 4 semaines à une température d'environ 60-65°C, permet d'obtenir un produit gélifié qui ne coule pas lorsqu'il est posé, à l'état de masse cubique, sur une surface plane.

11. Composition selon l'une quelconque des revendications 1 à 10, **caractérisée en ce qu'**elle comprend un dendrimère neutreet/ou un dendrimère de type ionique.

12. Composition selon la revendication 11, **caractérisée en ce que** le dendrimère neutre est un dendrimère dont les fonctions terminales sont essentiellement constituées de groupements de type acide carboxylique et/ou de type phosphonique et/ou de type sulfonique, sulfonate ou sulfate et/ou de type amine.

13. Composition selon la revendication 11 ou 12, **caractérisée en ce que** le dendrimère ionique est un dendrimère dont les fonctions terminales sont choisies parmi les groupements carboxylate et/ou sulfonium et/ou phosphonium et/ou amidinium et/ou guanidinium et/ou ammonium.

14. Composition selon la revendication 13, **caractérisée en ce que** les fonctions terminales du dendrimère ionique sont choisies parmi les groupements de type halogénure de N-hydrazinoyl-carbonyl-méthyl-N,N,N-trialkylammonium, notamment de type chlorure de N-hydrazinoyl-carbonyl-méthyl-N,N,N-triméthylammonium ou de type chlorure de N-hydrazinoyl-carbonyl-méthyl-N,N,N-pyridinium ou encore de type chlorure de N-hydrazinoyl-carbonyl-méthyl-N,N,N-tri-(n-propyl)ammonium.

15. Composition selon l'une quelconque des revendications 1 à 14, **caractérisée en ce qu'**elle comprend un dendrimère dont les fonctions terminales sont rattachées aux extrémités des chaînes ramifiées ou dendrons que constituent les branches du dit dendrimère, soit directement, soit par le moyen d'un maillon de connexion, le dit maillon de connexion se composant d'un radical hydrocarboné contenant de 2 à 50 atomes et pouvant être saturé ou insaturé et/ou linéaire ou ramifié et/ou substitué ou non, ou d'un radical hydrocarboné contenant également un ou plusieurs hétéroatomes, notamment de l'oxygène, du soufre, de l'azote, du phosphore, des halogènes.

16. Composition selon la revendication 15, **caractérisée en ce que** le radical hydrocarboné contient de 4 à 20 atomes.

17. Composition selon l'une quelconque des revendications 1 à 16, **caractérisée en ce qu'**elle comprend un dendrimère porteur de liaisons entre atomes de la quinzième colonne de la classification périodique des éléments chimiques, le nombre des dites liaisons étantcompris entre 2 et 80 000.

18. Composition selon la revendication 17, **caractérisée** ne ce que le nombre de liaisons est compris entre 20 et 20 000.

19. Composition selon la revendication 17 ou 18, caratcérisée en ce que le dendrimère est porteur de liaisons entre atomes de phosphore et atomes d'azote.

20. Composition selon l'une quelconque des revendications 1 à 19 **caractérisée en ce qu'**elle comprend un dendrimère dont le coeur est constitué d'un groupement chimique organique polyfonctionnel ; et/ou dont le coeur organique possède une valence multiple; et/ou dont le coeur se compose d'un radical hydrocarboné et/ou hétéroatomique ramifié ou cyclique voire polycyclique et/ou saturé ou insaturé et/ou substitué ou non contenant de 1 à 30 atomes,;

21. Composition selon la revendication 20, **caractérisée en ce que** le coeur organique possède une valence comprise entre 2 et 20.

22. Composition selon la revendication 21, **caractérisée en ce que** le coeur organique possède une valence comprise entre 3 et 10.

23. Composition selon l'une quelconque des revendications 1 à 22, **caractérisée en ce qu'**elle comprend un dendrimère dont les dendrons sont composés de radicaux hydrocarbonés et/ou de radicaux hydrocarbonés comprenant des hétéroatomes choisis parmi l'oxygène, le soufre, l'azote, le phosphore, les halogènes; et/ou dont les dendrons sont composés de chaînes ramifiées contenant des motifs chimiques identiques.

24. Composition selon l'une quelconque des revendications 1 à 23, **caractérisée en ce qu'**elle comprend un dendrimère gélifiable dont la structure comprend des volumes d'insertion de deux natures qui sont :
- les cavités internes du dendrimère dont les dimensions sont comprises entre 0,001 et 30nm³;
- les espaces interstitiels de la structure tridimensionnelle du gel dont les dimensions sont comprises entre 0,0005 et 50µm³.

25. Composition selon la revendication 24, **caractérisée en ce que** le diamètre des cavités internes du dendrimère sont comprises entre 0,01 et 10 nm³.

26. Composition selon la revendication 24 ou 25, **caractérisée en ce que** les dimensions des espaces interstitiels sont compris entre 0,001 et 20 µm³.

27. Composition selon l'une quelconque des revendications 1 à 26, **caractérisée en ce que** la moitié au moins de la ou des matières actives est contenue dans les espaces interstitiels de la structure tridimensionnelle du gel.

28. Composition selon l'une quelconque des revendications 1 à 27, **caractérisée en ce que** le support liquide ou solvant qu'elle contient est de l'eau et/ou un ou plusieurs solvants organiques.

29. Composition selon l'une quelconque des revendications 1 à 28, **caractérisée en ce qu'**elle libère de manière progressive et/ou contrôlée tout ou partie de la matière active utilisable notamment dans les domaines de l'agriculture et/ou de l'hygiène publique ou domestique qu'elle comprend.

30. Composition selon la revendication 29, **caractérisée en ce qu'**elle libère au moins 50% de la matière active qu'elle comprend.

31. Composition selon la revendication 30, **caractérisée en ce qu'**elle libère au moins 80% de la matière active qu'elle comprend.

32. Procédé de préparation d'une composition selon l'une quelconque des revendications 1 à 31, **caractérisé en ce qu'**il comprend les étapes
a) de solubiliser, de préférence à chaud, un mélange comprenant notamment une ou plusieurs matières actives utilisables dans les domaines de l'agriculture et/ou de l'hygiène publique ou domestique, un ou plusieurs dendrimères gélifiables et un support liquide, minéral ou organique ;
b) de chauffer le dit mélange durant 0,25 à 45 jours, à une température d'environ 60-65°C, de préférence à une température d'environ 35-40°C.

33. Procédé de préparation d'une composition pulvérulente **caractérisé en ce qu'**il comprend l'étape d'éliminer totalement ou partiellement le ou les solvants d'une composition selon la revendication 2.

34. Composition pulvérulente utilisable dans les domaines de l'agriculture et/ou de l'hygiène publique ou domestique et susceptible d'être obtenue selon le procédé de la revendication 33.

35. Composition pulvérulente selon la revendication 34 **caractérisée en ce que**, mélangée à un solvant et/ou à un mélange de solvants, elle est susceptible de reprendre la forme d'une composition selon l'une quelconque des revendications 1 à 31.

36. Composition pulvérulente selon la revendication 34 ou 35, **caractérisée en ce qu'**elle comprend un ou plusieurs adjuvants et/ou additifs de formulation, notamment des agents anti-mottants, des colorants, des épaississants, des agents tensioactifs, des composés anti-mousse, des détergents, des dispersants, des agents d'alcalinisation, des agents d'adhésion, des émulsifiants, des agents oxydants, des agents anticorrosion.

37. Composition pulvérulente selon l'une quelconque des revendications 34 à 36, **caractérisée en ce qu'**elle comprend une quantité de matières actives comprise entre 2 et 99,99% en poids.

38. Composition pulvérulente selon la revendication 37 **caractérisée en ce qu'**elle comprend une quantité de matières actives comprise entre 5 et 95% en poids.

39. Composition pulvérulente selon l'une quelconque des revendications 34 à 36, **caractérisée en ce qu'**elle comprend une quantité de dendrimère comprise entre 0,01 et 99,5% en poids.

40. Composition pulvérulente selon la revendication 39 **caractérisée en ce qu'**elle comprend une quantité de dendrimère comprise entre 0,5 et 50%, en poids.

41. Composition pulvérulente selon l'une quelconque des revendications 34 à 40, **caractérisée en ce qu'**elle libère de manière progressive et/ou contrôlée tout ou partie de la matière active utilisable notamment dans les domaines de l'agriculture et/ou de l'hygiène publique ou domestique qu'elle comprend.

42. Composition selon la revendication 41, **caractérisée en ce qu'**elle libère au moins 50% de la matière active qu'elle comprend.

43. Composition selon la revendication 42, **caractérisée en ce qu'**elle libère au moins 80% de la matière active qu'elle comprend.

44. Procédé de traitement et/ou de protection des cultures **caractérisé en ce qu'**il met en oeuvre une composition selon l'une quelconque des revendications 1 à 31 et 34 à 43.

45. Procédé selon la revendication 44, **caractérisé en ce qu'**il met en oeuvre des quantités de composition comprise entre 0,001 kg/ha et 5 kg/ha.

46. Procédé de traitement et/ou de protection utile en hygiène publique ou domestique, **caractérisé en ce qu'**il met en oeuvre une composition selon l'une quelconque des revendications 1 à 31 et 34 à 43.

47. Procédé selon la revendication 46, **caractérisé en ce qu'**il met en oeuvre des quantités de la dite composition comprises entre 0,1 et 200g/m² de surface à traiter et/ou à protéger.

## Claims

1. Gelled composition which can be used in the fields of agriculture and/or public or domestic hygiene, **characterized in that** it contains
- one or more active ingredients which can be used in these fields;
- one or more gellable dendrimers;
- a liquid, mineral or organic carrier.

2. Composition according to Claim 1, **characterized in that** it contains one or more pesticidal active ingredients, in particular of the herbicide and/or fungicide and/or insecticide and/or acaricide and/or rodenticide and/or nematicide and/or insect repellent and/or pest repellent type, and/or one or more active ingredients which regulate(s) the growth of plants and/or insect growth regulator active ingredients.

3. Composition according to Claim 1 or 2, **characterized in that** it contains one or more additives and/or adjuvants and/or anti-caking agents and/or colorants and/or thickeners and/or surfactants and/or antifoams and/or detergents and/or alkalinizing agents and/or stickers and/or emulsifiers and/or dispersants and/or oxidants and/or corrosion inhibitors and/or attractants and/or food substances.

4. Composition according to one of Claims 1 to 3, **characterized in that** the active ingredient(s) is(are) present in amounts of from 0.5 to 99.99% by weight.

5. Composition according to Claim 4, **characterized in that** the active ingredient(s) is(are) present in amounts of from 5 to 70% by weight.

6. Composition according to one of Claims 1 to 3, **characterized in that** it comprises a dendrimer in an amount of from 0.01 to 99.5% by weight.

7. Composition according to Claim 6, **characterized in that** it comprises a dendrimer in an amount of from 0.1 to 60% by weight.

8. Composition according to any of Claims 1 to 7, **characterized in that** it contains a dendrimer which, when mixed with water or solubilized in water in weight ratios of 1.5 and 98.5, respectively, at a temperature of approximately 65°C allows, after 48 hours, to obtain a gelled product which, when placed as a cubic mass on a plane surface, does not run.

9. Composition according to any of Claims 1 to 7, **characterized in that** it contains a dendrimer which, when mixed with water or solubilized in water in weight ratios of 1 and 1, respectively, at room temperature allows, after 2 weeks, obtention of a gelled product which, when placed as a cubic mass on a plane surface, does not run.

10. Composition according to any of Claims 1 to 7, **characterized in that** it contains a dendrimer which, when mixed with water or solubilized in water in weight ratios of 1.8 and 98.2, respectively, at a temperature which may be between 40 and 65°C, followed by heating for 4 weeks at a temperature of approximately 60-65°C allows, after 48 hours, obtention of a gelled product which, when placed as a cubic mass on a plane surface, does not run.

11. Composition according to any of Claims 1 to 10, **characterized in that** it contains a neutral dendrimer and/or a dendrimer of ionic type.

12. Composition according to Claim 11, **characterized in that** the neutral dendrimer is a dendrimer whose terminal functions consist essentially of groups of the carboxylic acid type and/or the phosphonic acid type and/or the sulphonic acid type, sulphonate type or sulphate type and/or the amine type.

13. Composition according to Claim 11 or 12, **characterized in that** the ionic dendrimer is a dendrimer whose terminal functions are selected from among carboxylate and/or sulphonium and/or phosphonium and/or amidinium and/or guanidinium and/or ammonium groups.

14. Composition according to Claim 13, **characterized in that** the terminal functions of the ionic dendrimer are selected from among the N-hydrazinocarbonylmethyl-N,N,N-trialkylammonium halide type, in particular of the N-hydrazinocarbonylmethyl-N,N,N-trimethylammonium chloride type or of the N-hydrazinocarbonylmethyl-N,N,N-pyridinium chloride type or else of the N-hydrazinocarbonmethyl-N,N,N-tri(n-propyl)-ammonium type.

15. Composition according to any of Claims 1 to 14, **characterized in that** it contains a dendrimer whose terminal functions are attached to the ends of the branched chains or dendrons which make up the branches of this dendrimer, either directly or by means of a connecting member, where this connecting member is composed of a hydrocarbon radical containing 2 to 50 atoms and can be saturated or unsaturated and/or straight-chain or branched and/or substituted or unsubstituted, or of a hydrocarbon radical which likewise contains one or more hetero atoms, in particular oxygen, sulphur, nitrogen, phosphorus and halogens.

16. Composition according to Claim 15, **characterized in that** the hydrocarbon radical contains 4 to 20 atoms.

17. Composition according to any of Claims 1 to 16, **characterized in that** it contains a dendrimer with bonds between atoms of the fifteenth column of the Periodic Table, the number of these bonds amounting to between 2 and 80,000.

18. Composition according to Claim 17, **characterized in that** the number of bonds amounts to between 20 and 20,000.

19. Composition according to Claim 17 or 18, **characterized in that** the dendrimer has bonds between phosphorus atoms and nitrogen atoms.

20. Composition as claimed in any of Claims 1 to 19, **characterized in that** it contains a dendrimer whose core consists of a polyfunctional organic chemical group and/or whose organic core is multivalent and/or whose core consists of a hydrocarbon radical and/or a hetero atom radical which is branched or cyclic, or even polycyclic and/or saturated or unsaturated and/or substituted or unsubstituted and contains 1 to 30 atoms.

21. Composition according to Claim 20, **characterized in that** the organic core has a valency of between 2 and 20.

22. Composition according to Claim 21, **characterized in that** the organic core has a valency of between 3 and 10.

23. Composition according to any of Claims 1 to 22, **characterized in that** it contains a dendrimer whose dendrons consist of hydrocarbon radicals and/or hydrocarbon radicals which contain hetero atoms selected from among oxygen, sulphur, nitrogen, phosphorus and halides, and/or whose dendrons consist of branched chains containing identical chemical motifs.

24. Composition according to any of Claims 1 to 23, **characterized in that** it contains a gellable dendrimer whose structure has two types of insertion volumes, namely
- the internal cavities of the dendrimer, whose dimensions are between 0.001 and 30 nm³, and
- the interstitial spaces of the three-dimensional structure of the gel whose dimensions are between 0.0005 and 50 µm³.

25. Composition according to Claim 24, **characterized in that** the diameters of the internal cavities of the dendrimer are between 0.01 and 10 nm³.

26. Composition according to Claim 24 or 25, **characterized in that** the dimensions of the interstitial spaces are between 0.001 and 20 nm³.

27. Composition according to any of Claims 1 to 26, **characterized in that** at least half of the active substance(s) is present in the interstitial spaces of the three-dimensional structure of the gel.

28. Composition according to any of Claims 1 to 27, **characterized in that** the liquid carrier or solvent which it contains is water and/or one or more organic solvents.

29. Composition according to any of Claims 1 to 28, **characterized in that** it releases all or some of the active substance which can be used in particular in the fields of agriculture and/or public or domestic hygiene, which it contains, in a progressive and/or controlled manner.

30. Composition according to Claim 29, **characterized in that** it releases at least 50% of the active substance which it contains.

31. Composition according to Claim 30, **characterized in that** it releases at least 80% of the active substance which it contains.

32. Process for the preparation of a composition according to any of Claims 1 to 31, **characterized in that** it contains the steps of
a) solubilizing, preferably under hot conditions, a mixture which contains in particular one or more active substances which can be used in the fields of agriculture and/or public or domestic hygiene, one or more gellable dendrimers and a liquid, mineral or organic carrier, and
b) of heating this mixture for 0.25 to 45 days at a temperature of approximately 60-65°C, preferably at a temperature of approximately 35-40°C.

33. Process for the preparation of a pulverulent composition, **characterized in that** it contains the step of completely or partly removing the solvent(s) from a composition according to Claim 2.

34. Pulverulent composition which can be used in the fields of agriculture and/or public or domestic hygiene and which can be obtained in accordance with the process of Claim 33.

35. Pulverulent composition according to Claim 34, **characterized in that**, when mixed with a solvent and/or a solvent mixture, it can reassume the shape of a composition according to any of Claims 1 to 31.

36. Pulverulent composition as claimed in Claim 34 or 35, **characterized in that** it contains one or more adjuvants and/or formulation additives, in particular anti-caking agents, colorants, thickeners, surfactants, antifoams, detergents, dispersants, alkalinizing agents, stickers, emulsifiers, oxidants or corrosion inhibitors.

37. Pulverulent composition according to any of Claims 34 to 36, **characterized in that** it contains active substances in an amount of between 2 and 99.99% by weight.

38. Pulverulent composition according to Claim 37, **characterized in that** it contains active substances in an amount of between 5 and 95% by weight.

39. Pulverulent composition according to any of Claims 34 to 36, **characterized in that** it contains a dendrimer in an amount of between 0.01 and 99.5% by weight.

40. Pulverulent composition according to Claim 39, **characterized in that** it contains a dendrimer in an amount of between 0.5 and 50% by weight.

41. Pulverulent composition according to any of Claims 34 to 40, **characterized in that** it releases all or some of the active substance which can be used in particular in the fields of agriculture and/or public or domestic hygiene, which it contains, progressively or in a delayed manner.

42. Composition according to Claim 41, **characterized in that** it releases at least 50% of the active substance which it contains.

43. Composition according to Claim 42, **characterized in that** it releases at least 80% of the active substance which it contains.

44. Process for the treatment and/or protection of crops, **characterized in that** a composition according to any of Claims 1 to 31 and 34 to 43 is employed.

45. Process according to Claim 44, **characterized in that** the composition is employed in amounts of between 0.001 kg/ha and 5 kg/ha.

46. Treatment and/or protection method for public or domestic hygiene, **characterized in that** the composition according to any of Claims 1 to 31 and 34 to 43 are employed.

47. Method according to Claim 46, **characterized in that** the composition is employed in amounts of between 0.1 and 200 g/m² surface to be treated and/or to be protected.

## Patentansprüche

1. Gelierte Zusammensetzung zur Verwendung auf dem Gebiet der Landwirtschaft und/oder der öffentlichen Hygiene bzw. Haushaltshygiene, **dadurch gekennzeichnet, daß** sie
- einen oder mehrere Wirkstoffe, die auf diesen Gebieten verwendet werden können,
- einen oder mehrere gelierbare Dendrimere sowie
- einen anorganischen oder organischen flüssigen Träger
enthält.

2. Zusammensetzung nach Anspruch 1, **dadurch gekennzeichnet, daß** sie einen oder mehrere Pestizidwirkstoffe, insbesondere des Herbizid- und/oder Fungizid- und/oder Insektizid- und/oder Akarizidund/oder Rodentizid- und/oder Nematizidtyps und/oder des Insekten- und/oder Schädlings-Repellent-Typs und/oder einen oder mehrere Wirkstoffe des Pflanzen- und/oder Insektenwachstumsregulatortyps enthält.

3. Zusammensetzung nach Anspruch 1 oder 2, **dadurch gekennzeichnet, daß** sie ein/e/en oder mehrere Zusatzstoffe und/oder Hilfsstoffe und/oder Antibackmittel und/oder Farbstoffe und/oder Verdickungsmittel und/oder Tenside und/oder schaumhemmende Verbindungen und/oder Reinigungsmittel und/oder Alkalisierungsmittel und/oder Haftmittel und/oder Emulgatoren und/oder Dispergiermittel und/oder Oxidationsmittel und/oder Antikorrosiva und/oder Attractants und/oder Nahrungsstoffe enthält.

4. Zusammensetzung nach einem der Ansprüche 1 bis 3, **dadurch gekennzeichnet, daß** der Wirkstoff bzw. die Wirkstoffe in Mengen von 0,5 bis 99,99 Gew.-% vorliegen.

5. Zusammensetzung nach Anspruch 4, **dadurch gekennzeichnet, daß** der Wirkstoff bzw. die Wirkstoffe in Mengen von 5 bis 70 Gew.-% vorliegen.

6. Zusammensetzung nach einem der Ansprüche 1 bis 3, **dadurch gekennzeichnet, daß** sie ein Dendrimer in einer Menge von 0,01 bis 99,5 Gew.-% enthält.

7. Zusammensetzung nach Anspruch 6, **dadurch gekennzeichnet, daß** sie ein Dendrimer in einer Menge von 0,1 bis 60 Gew.-% enthält.

8. Zusammensetzung nach einem der Ansprüche 1 bis 7, **dadurch gekennzeichnet, daß** sie ein Dendrimer enthält, das bei Abmischung mit Wasser oder Solubilisierung in Wasser in einem Gewichtsverhältnis von 1,5/98,5 bei einer Temperatur von ungefähr 65°C nach 48 Stunden zu einem gelierten Produkt führt, das beim Aufbringen in Würfelform auf eine ebene Oberfläche nicht verläuft.

9. Zusammensetzung nach einem der Ansprüche 1 bis 7, **dadurch gekennzeichnet, daß** sie ein Dendrimer enthält, das bei Abmischung mit Wasser oder Solubilisierung in Wasser in einem Gewichtsverhältnis von 1/1 bei Raumtemperatur nach zwei Wochen zu einem gelierten Produkt führt, das beim Aufbringen in Würfelform auf eine ebene Oberfläche nicht verläuft.

10. Zusammensetzung nach einem der Ansprüche 1 bis 7, **dadurch gekennzeichnet, daß** sie ein Dendrimer enthält, das bei Abmischung mit Wasser oder Solubilisierung in Wasser in einem Gewichtsverhältnis von 1,8/98,2 bei einer Temperatur, die ungefähr zwischen 40 und 65°C liegen kann, und anschließendem 4wöchigen Erhitzen auf eine Temperatur von ungefähr 60-65°C zu einem gelierten Produkt führt, das beim Aufbringen in Würfelform auf eine ebene Oberfläche nicht verläuft.

11. Zusammensetzung nach einem der Ansprüche 1 bis 10, **dadurch gekennzeichnet, daß** sie ein neutrales Dendrimer und/oder ein ionisches Dendrimer enthält.

12. Zusammensetzung nach Anspruch 11, **dadurch gekennzeichnet, daß** es sich bei dem neutralen Dendrimer um ein Dendrimer handelt, dessen Endgruppen im wesentlichen aus Gruppen des Carbonsäuretyps und/oder des Phosphonsäuretyps und/oder des Sulfonsäure-, Sulfonat- oder Sulfattyps und/oder des Amintyps bestehen.

13. Zusammensetzung nach Anspruch 11 oder 12, **dadurch gekennzeichnet, daß** es sich bei dem ionischen Dendrimer um ein Dendrimer handelt, dessen Endgruppen unter den Carboxylat- und/oder Sulfonium- und/oder Phosphonium- und/oder Amidinium- und/oder Guanidinium- und/oder Ammoniumgruppen ausgewählt sind.

14. Zusammensetzung nach Anspruch 13, **dadurch gekennzeichnet, daß** die Endgruppen des ionischen Dendrimers unter den Gruppen des Typs N-Hydrazinocarbonylmethyl-N,N,N-trialkylammoniumhalogenid, insbesondere des Typs N-Hydrazinocarbonylmethyl-N,N,N,-trimethylammoniumchlorid oder des Typs N-Hydrazinocarbonylmethyl-N,N,N-pyridiniumchlorid oder auch des Typs N-Hydrazinocarbonylmethyl-N,N,N-tri(n-propyl)-ammoniumchlorid, ausgewählt werden.

15. Zusammensetzung nach einem der Ansprüche 1 bis 14, **dadurch gekennzeichnet, daß** sie ein Dendrimer enthält, dessen Endgruppen mit den Enden von verzweigten Ketten oder von Dendritenästen, die die Äste dieses Dendrimers bilden, verknüpft sind, und zwar entweder direkt oder mittels eines Verbindungsglieds, wobei sich dieses Verbindungsglied aus einem Kohlenwasserstoffrest, der 2 bis 50 Atome enthält und der gesättigt oder ungesättigt und/oder geradkettig oder verzweigt und/oder gegebenenfalls substituiert sein kann, oder aus einem Kohlenwasserstoffrest, der außerdem ein oder mehrere Heteroatome, insbesondere Sauerstoff, Schwefel, Stickstoff, Phosphor oder Halogene enthält, zusammensetzt.

16. Zusammensetzung nach Anspruch 15, **dadurch gekennzeichnet, daß** der Kohlenwasserstoffrest 4 bis 20 Atome enthält.

17. Zusammensetzung nach einem der Ansprüche 1 bis 16, **dadurch gekennzeichnet, daß** sie ein Dendrimer mit Bindungen zwischen den Atomen der 15. Gruppe des Periodensystems der Elemente enthält, wobei die Anzahl dieser Bindungen zwischen 2 und 80000 liegt.

18. Zusammensetzung nach Anspruch 17, **dadurch gekennzeichnet, daß** die Anzahl der Bindungen zwischen 20 und 20000 liegt.

19. Zusammensetzung nach Anspruch 17 oder 18, **dadurch gekennzeichnet, daß** das Dendrimer Bindungen zwischen Phosphoratomen und Stickstoffatomen trägt.

20. Zusammensetzung nach einem der Ansprüche 1 bis 19, **dadurch gekennzeichnet, daß** sie ein Dendrimer enthält, dessen Initiationskern aus einer polyfunktionellen organischen chemischen Gruppe besteht und/oder dessen organischer Initiationskern eine mehrwertige Valenz aufweist und/oder dessen Kern sich aus einem Kohlenwasserstoffrest und/oder einem Heteroatomrest, der verzweigt oder cyclisch, nämlich polycyclisch, und/oder gesättigt oder ungesättigt und/oder gegebenenfalls substituiert ist und 1 bis 30 Atome enthält, zusammensetzt.

21. Zusammensetzung nach Anspruch 20, **dadurch gekennzeichnet, daß** der organische Kern eine Valenz von 2 bis 20 aufweist.

22. Zusammensetzung nach Anspruch 21, **dadurch gekennzeichnet, daß** der organische Kern eine Valenz von 3 bis 10 aufweist.

23. Zusammensetzung nach einem der Ansprüche 1 bis 22, **dadurch gekennzeichnet, daß** sie ein Dendrimer enthält, dessen Dendritenäste aus Kohlenwasserstoffresten und/oder Kohlenwasserstoffresten mit Heteroatomen aus der Gruppe Sauerstoff, Schwefel, Stickstoff, Phosphor und den Halogenen besteht, und/oder dessen Dendritenäste aus verzweigten Ketten mit identischen chemischen Gruppierungen besteht.

24. Zusammensetzung nach einem der Ansprüche 1 bis 23, **dadurch gekennzeichnet, daß** sie ein gelierbares Dendrimer enthält, dessen Struktur zweierlei Arten von Hohlräumen aufweist, nämlich
- die Innenräume des Dendrimers, deren Abmessungen 0,001 bis 30 nm³ betragen, sowie
- die Interstitialräume der dreidimensionalen Struktur des Gels, deren Abmessungen 0,0005 bis 50 µm³ betragen.

25. Zusammensetzung nach Anspruch 24, **dadurch gekennzeichnet, daß** der Durchmesser der Innenräume des Dendrimers 0,01 bis 10 nm³ beträgt.

26. Zusammensetzung nach Anspruch 24 oder 25, **dadurch gekennzeichnet, daß** die Abmessungen der Interstitialräume 0,001 bis 20 µm³ betragen.

27. Zusammensetzung nach einem der Ansprüche 1 bis 26, **dadurch gekennzeichnet, daß** mindestens die Hälfte des Wirkstoffs bzw. der Wirkstoffe in den Interstitialräumen der dreidimensionalen Struktur des Gels vorliegt.

28. Zusammensetzung nach einem der Ansprüche 1 bis 27, **dadurch gekennzeichnet, daß** es sich bei dem flüssigen Träger oder Lösungsmittel, den bzw. das sie enthält, um Wasser und/oder um ein oder mehrere organische Lösungsmittel handelt.

29. Zusammensetzung nach einem der Ansprüche 1 bis 28, **dadurch gekennzeichnet, daß** sie den insbesondere auf dem Gebiet der Landwirtschaft und/oder der öffentlichen Hygiene oder Haushaltshygiene verwendbaren Wirkstoff, den sie enthält, ganz oder teilweise fortlaufend und/oder kontrolliert freisetzt.

30. Zusammensetzung nach Anspruch 29, **dadurch gekennzeichnet, daß** sie mindestens 50% des Wirkstoffs, den sie enthält, freisetzt.

31. Zusammensetzung nach Anspruch 30, **dadurch gekennzeichnet, daß** sie mindestens 80% des Wirkstoffs, den sie enthält, freisetzt.

32. Verfahren zur Herstellung einer Zusammensetzung nach einem der Ansprüche 1 bis 31, **gekennzeichnet durch** die folgenden Schritte:
a) Solubilisierung einer vorzugsweise heißen Mischung, die insbesondere einen oder mehrere auf dem Gebiet der Landwirtschaft und/oder der öffentlichen Hygiene oder Haushaltshygiene verwendbaren Wirkstoffe, ein oder mehrere gelierbare Dendrimere und einen anorganischen oder organischen flüssigen Träger enthält;
b) 0,25 bis 45tägiges Erhitzen dieser Mischung auf eine Temperatur von ungefähr 60-65°C, vorzugsweise auf eine Temperatur von ungefähr 35-40°C.

33. Verfahren zur Herstellung einer pulverförmigen Zusammensetzung, **dadurch gekennzeichnet, daß** sie den Schritt der vollständigen oder teilweisen Entfernung des Lösungsmittels bzw. der Lösungsmittel aus einer Zusammensetzung nach Anspruch 2 umfaßt.

34. Pulverförmige Zusammensetzung, die auf dem Gebiet der Landwirtschaft und/oder der öffentlichen Hygiene oder Haushaltshygiene verwendet werden kann und die nach dem Verfahren von Anspruch 33 erhältlich ist.

35. Pulverförmige Zusammensetzung nach Anspruch 34, **dadurch gekennzeichnet, daß** sie, wenn sie mit einem Lösungsmittel und/oder einer Mischung von Lösungsmitteln vermischt wird, wieder die Form einer Zusammensetzung nach einem der Ansprüche 1 bis 31 annehmen kann.

36. Pulverförmige Zusammensetzung nach Anspruch 34 oder 35, **dadurch gekennzeichnet, daß** sie einen oder mehrere Hilfsstoffe und/oder Formulierungszusätze enthält, insbesondere Antibackmittel, Farbstoffe, Verdickungsmittel, Tenside, schaumhemmende Verbindungen, Reinigungsmittel, Dispergiermittel, Alkalisierungsmittel, Haftmittel, Emulgatoren, Oxidationsmittel, Antikorrosiva.

37. Pulverförmige Zusammensetzung nach einem der Ansprüche 34 bis 36, **dadurch gekennzeichnet, daß** sie Wirkstoffe in einer Menge von 2 bis 99,99 Gew.-% enthält.

38. Pulverförmige Zusammensetzung nach Anspruch 37, **dadurch gekennzeichnet, daß** sie Wirkstoffe in einer Menge von 5 bis 95 Gew.-% enthält.

39. Pulverförmige Zusammensetzung nach einem der Ansprüche 34 bis 36, **dadurch gekennzeichnet, daß** sie ein Dendrimer in einer Menge von 0,01 bis 99,5 Gew.-% enthält.

40. Pulverförmige Zusammensetzung nach Anspruch 39, **dadurch gekennzeichnet, daß** sie ein Dendrimer in einer Menge von 0,5 bis 50 Gew.-% enthält.

41. Pulverförmige Zusammensetzung nach einem der Ansprüche 34 bis 40, **dadurch gekennzeichnet, daß** sie den insbesondere auf dem Gebiet der Landwirtschaft und/oder der öffentlichen Hygiene oder Haushaltshygiene verwendbaren Wirkstoff, den sie enthält, ganz oder teilweise fortlaufend und/oder kontrolliert freisetzt.

42. Zusammensetzung nach Anspruch 41, **dadurch gekennzeichnet, daß** sie mindestens 50% des Wirkstoffs, den sie enthält, freisetzt.

43. Zusammensetzung nach Anspruch 42, **dadurch gekennzeichnet, daß** sie mindestens 80% des Wirkstoffs, den sie enthält, freisetzt.

44. Verfahren zur Behandlung und/oder zum Schutz von Kulturen, **dadurch gekennzeichnet, daß** man eine Zusammensetzung nach einem der Ansprüche 1 bis 31 und 34 bis 43 anwendet.

45. Verfahren nach Anspruch 44, **dadurch gekennzeichnet, daß** man die Zusammensetzung in einer Menge von 0,001 kg/ha bis 5 kg/ha einsetzt.

46. Verfahren zur Behandlung und/oder zum Schutz für die öffentliche Hygiene oder die Haushaltshygiene, **dadurch gekennzeichnet, daß** man eine Zusammensetzung nach einem der Ansprüche 1 bis 31 und 34 bis 43 einsetzt.

47. Verfahren nach Anspruch 46, **dadurch gekennzeichnet, daß** man diese Zusammensetzung in einer Menge von 0,1 bis 200 g/m² zu behandelnde und/oder zu schützende Oberfläche einsetzt.
